(19) Europäisches Patentamt / European Patent Office / Office européen des brevets

(11) **EP 4 407 529 A1**

(12) **EUROPEAN PATENT APPLICATION**

(43) Date of publication:
**31.07.2024 Bulletin 2024/31**

(21) Application number: **23305114.3**

(22) Date of filing: **30.01.2023**

(51) International Patent Classification (IPC):
**G06Q 10/04** (2023.01)

(52) Cooperative Patent Classification (CPC):
**G06Q 10/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **TOTALENERGIES ONETECH**
**92400 Courbevoie (FR)**

(72) Inventors:
- **Maillet, Fabian**
  **92400 Courbevoie (FR)**
- **Ghazouani, Sami**
  **92400 Courbevoie (FR)**

(74) Representative: **Bandpay & Greuter**
**11 rue Christophe Colomb**
**75008 Paris (FR)**

(54) **OPTIMIZING A HYBRID SYSTEM FOR GREEN H2 AND/OR H2 DERIVATIVE PRODUCTION AND/OR CONVERSION**

(57) The disclosure relates to method for optimizing a hybrid system for green $H_2$ and/or $H_2$ derivative production and/or conversion. The method comprises providing constraints, which include one or more constraints each related to a $H_2$ demand over a predetermined time period, and/or one or more constraints related to technologies of the hybrid system that are involved in the green $H_2$ and/or $H_2$ derivative production and/or conversion. The method comprises providing an objective function quantifying a rate of the green $H_2$ and/or $H_2$ derivative production and/or conversion by only renewable technologies of the system. The method comprises optimizing the objective function based on the constraints, the optimization using a MILP optimization method based on a linear formulation of the constraints and having free variables including a green $H_2$ and/or H2 derivative production capacity of an electrolyzer of the system and operational variables for mass and power exchanges between the system technologies.

**EP 4 407 529 A1**

**Description**

**TECHNICAL FIELD**

The disclosure relates to the field of computer programs and systems, and more specifically to a method, system and program for optimizing a hybrid system for green $H_2$ and/or $H_2$ derivative production and/or conversion.

**BACKGROUND**

Green $H_2$ and/or green $H_2$ derivatives are more and more used nowadays, and the demand for green $H_2$ and/or green $H_2$ derivatives increases.

Within this context, there is still a need for improved solutions for optimizing a hybrid system for green $H_2$ and/or $H_2$ derivative production and/or conversion.

**SUMMARY**

It is therefore provided a computer-implemented method for optimizing a hybrid system for green $H_2$ and/or $H_2$ derivative production and/or conversion. The method comprises providing constraints. The constraints include one or more constraints each related to a $H_2$ and/or $H_2$ derivative demand over a predetermined time period, and/or one or more constraints related to technologies of the hybrid system that are involved in the green $H_2$ and/or $H_2$ derivative production and/or conversion. The method further comprises providing an objective function. The objective function quantifies a rate of the green $H_2$ and/or $H_2$ derivative production and/or conversion by only renewable technologies of the hybrid system. The method further comprises optimizing the objective function based on the constraints. The optimization has free variables. The free variables include a green $H_2$ and/or $H_2$ derivative production capacity of an electrolyzer of the system and operational variables for mass and power exchanges between the technologies of the system. The free variables also include a renewable power production capacity of the hybrid system. The optimization uses a MILP optimization method that is based on a linear formulation of the constraints.

The method may comprise one or more of the following:

- the free variables further include variables that represent a BESS and/or $H_2$ storage capacity, and/or variables that represent a capacity of a conversion system for production of $H_2$ derivatives;
- the constraints include non-linear constraints, and the method further comprises, before the optimization:

  ◦ linearizing the non-linear constraints;

- the one or more constraints each related to a $H_2$ and/or $H_2$ derivative demand over a predetermined time period include one or more of:

  ◦ an hourly $H_2$ and/or $H_2$ derivative demand rule;
  ◦ a daily $H_2$ and/or $H_2$ derivative demand rule; and/or
  ◦ an annual $H_2$ and/or $H_2$ derivative demand rule;

- the hourly $H_2$ and/or $H_2$ derivative demand rule includes:

  ◦ a minimal hourly demand rule and/or a maximal hourly demand rule; and/or
  ◦ a minimal ramp-up rule and/or a maximal ramp-down rule;

- the daily $H_2$ and/or $H_2$ derivative demand rule includes a minimal daily demand rule and/or a maximal daily demand rule;
- the one or more constraints each related to a $H_2$ and/or $H_2$ derivative demand over a predetermined time period further include one or more fluctuation rules over the predetermined time period;
- the one or more constraints related to technologies of the hybrid system that are involved in the green $H_2$ and/or $H_2$ derivative production and/or conversion include one or more of:

  ◦ a photovoltaic plant production rule;
  ◦ a wind farm production rule;
  ◦ one or more constraints related to an electrolyzer of the system, including a power consummation rule during production and/or conversion when the electrolyzer is turned off, a power variation rule of the electrolyzer, a water treatment consumption rule, and/or a capacity rule of the electrolyzer;

◦ a charge time rule for a battery of the system, a state-of-charge rule of the battery, a state-of-charge end rule of the battery, and/or a capacity rule of the battery;

◦ an hourly grid energy purchase and/or injection rule and/or an annual maximal grid energy purchase rule; and/or

◦ a $H_2$ storage maximal charge and discharge rule, a $H_2$ state-of-charge rule, and/or an electricity consumption for Hz storage rule;

- the green $H_2$ and/or $H_2$ derivative production and/or conversion consists in at least $H_2$ derivative production, and the one or more constraints related to technologies of the hybrid system further include:

  ◦ a PGU power production rule and/or a PGU activation rule;

- the green $H_2$ and/or $H_2$ derivative production and/or conversion consists at least in H2 derivative production, and the constraints include one or more of:

  ◦ a $H_2$ derivative production rule;
  ◦ a power consumption rule for $H_2$ derivative production;
  ◦ a reactor capacity rule; and/or
  ◦ one or more reactor operation rules;

- the constraints include energy balance constraints and/or mass balance constraints;
- the green $H_2$ and/or $H_2$ derivative production and/or conversion consists in at least green $H_2$ production, and:

  o the energy balance constraints include:

  ▪ an energy balance equation for renewable energy;
  ▪ a grid energy balance equation;
  ▪ a battery state of charge equation; and
  ▪ an electrolyzer stand-by-mode consumption rule; and/or

  o the mass balance constraints include:

  ▪ a green and non-green $H_2$ production distinction rule;
  ▪ a balance rule for Hz storage; and
  ▪ a balance rule for $H_2$ directly delivered and Hz stored; and/or

- the green $H_2$ and/or $H_2$ derivative production and/or conversion consists in at least H2 derivative production, and:

  o the energy balance constraints include:

  ▪ an energy balance equation for renewable energy;
  ▪ a battery state of charge equation; and
  ▪ a grid energy balance equation; and/or

  o the mass balance constraints include:

  ▪ a $H_2$ production rule;
  ▪ a water treatment rule;
  ▪ a balance rule for Hz storage;
  ▪ a balance rule for $H_2$ derivative production; and
  ▪ a balance rule for $H_2$ directly consumed by conversion reactor and $H_2$ stored.

It is further provided a computer program comprising instructions for performing the method.

It is further provided a computer readable storage medium having recorded thereon the computer program.

It is further provided a computer system comprising a processor coupled to a memory, the memory having recorded thereon the computer program.

## BRIEF DESCRIPTION OF THE DRAWINGS

Non-limiting examples will now be described in reference to the accompanying drawings, where:

- FIG.s 1 to 4 illustrate the method; and

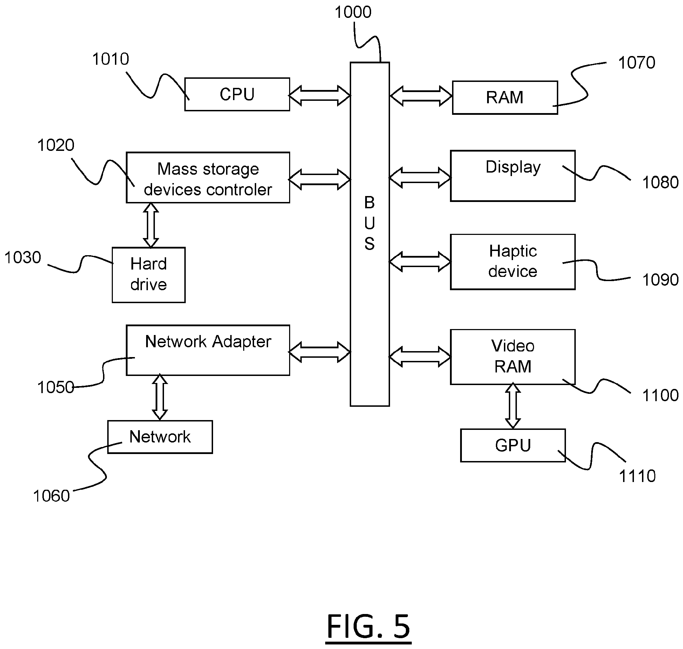

- FIG. 5 shows an example of the system.

## DETAILED DESCRIPTION

It is proposed a computer-implemented method for optimizing a hybrid system for green $H_2$ and/or $H_2$ derivative production and/or conversion. The method comprises providing constraints. The constraints include one or more constraints each related to a Hz demand over a predetermined time period, and/or one or more constraints related to technologies of the hybrid system that are involved in the green $H_2$ and/or $H_2$ derivative production and/or conversion. The method further comprises providing an objective function. The objective function quantifies a rate of the green $H_2$ and/or $H_2$ derivative production and/or conversion by only renewable technologies of the hybrid system. The method further comprises optimizing the objective function based on the constraints. The optimization has free variables. The free variables include a green $H_2$ and/or $H_2$ derivative production capacity of an electrolyzer of the system and operational variables for mass and power exchanges between the technologies of the system. The free variables also include a renewable power production capacity of the hybrid system. The optimization uses a MILP optimization method that is based on a linear formulation of the constraints.

The method (i.e. the proposed method for optimizing a hybrid system for green $H_2$ and/or $H_2$ derivative production and/or conversion) constitutes an improved solution for optimizing a hybrid system for green H2 and/or H2 derivative production and/or conversion.

Notably, the method optimizes a hybrid system that produces green Hz and/or that produces green $H_2$ derivative (through conversion of green $H_2$ into green $H_2$ derivative) by optimizing an objective function that quantifies a rate of the green $H_2$ and/or $H_2$ derivative production and/or conversion by only renewable technologies of the hybrid system. This means that the method optimizes the rate of production of green $H_2$ and/or $H_2$ derivative using only renewable technologies, i.e. while the system may comprise other sources of energy than renewable technologies (e.g. the grid), the method optimizes the rate of the production green $H_2$ and/or $H_2$ derivative by only the renewable part of the energy sources. The method thus provides an optimal setting and sizing of the system (in terms of operational variables and in term of capacity of the involved technologies, including the electrolyzer) with respect to production rate of the green $H_2$ and/or $H_2$ derivative by green technologies only. This allows to reduce the carbon footprint of the hybrid system.

Furthermore, the method performs the optimization without requiring any predefined dispatch rule of any predefined choice of the technologies of the hybrid system. This provides flexibility in the technologies that may be part of the hybrid system and in the energy dispatch within the system. For example, a user of the method may optimize the system for any dispatch configuration and/or any choice of technologies he/she wants, without being constrained by a predefined setting of technologies or by a predefined energy dispatch rule. The user may for example add or remove technologies in an existing system (for example adding batteries or Hz storage systems, or considering only certain types of production units) and optimize the system for these various configurations. The method also allows to account for operational constraints at both the technologies level and the system level (e.g. production quantity, RFNBO rate (as discussed hereinafter)).

Moreover, the method performs the optimization using a MILP optimization method. The MILP optimization allows accounting for all the constraints related to the system in the optimization and thus to provide for a global optimization of the system.

The method is for optimizing a hybrid system for green $H_2$ and/or $H_2$ derivative production and/or conversion. By "optimizing the hybrid system", it is meant that the method provides an optimize setting and/or sizing of the hybrid system with respect to production of green $H_2$ and/or of $H_2$ derivative (through the conversion of green $H_2$). In the case of the method, it is the rate of production of green Hz and/or of Hz derivative that is optimized with respect to the constraints and by varying the free variables, which include a renewable power production capacity of the hybrid system, a green $H_2$ and/or $H_2$ derivative production capacity of an electrolyzer of the system and operational variables for mass and power exchanges between the technologies of the system. In other words, the method determines a value for the free variables to that the system is optimized for green $H_2$ and/or $H_2$ derivative production in that the rate of production of green $H_2$ and/or of $H_2$ derivative tends to reach its optimal value for this determined value of the free variables.

The system is a hybrid system for green $H_2$ and/or $H_2$ derivative production and/or conversion. In other words, the system is hybrid system (e.g. a hybrid power and/or heat plant) that produces green $H_2$ and/or that produces $H_2$ derivative by converting green $H_2$ into $H_2$ derivative. As known per se, Hz designates the dihydrogen. By $H_2$ derivative production, it is meant the production of one or more $H_2$ derivatives, such as one or more of $NH_3$ (ammonia), $M_eOH$ (Methanol), and/or $LH_2$ (liquid hydrogen). Thus, by "green $H_2$ and/or $H_2$ derivative production and/or conversion", it is meant the production of green $H_2$ and/or the production of one or more green $H_2$ derivatives through conversion of green Hz into these of one or more green $H_2$ derivatives.

The system being hybrid, it comprises green (renewable) technologies and non-green technologies. The hybrid system comprises an electrolyzer, that produces $H_2$ as known *per se.* The hybrid system may comprise renewable power generating units, including a wind farm and/or a photovoltaic plant, that supply electrical power to the electrolyzer (the electrolyzer using this power to produce $H_2$, this produced $H_2$ being referred to as "green $H_2$"), and that may supply power to other technologies (*e.g.* a $H_2$ storage). The hybrid system may be connected to the grid, that may supply power (*i.e.* non-green power) to the technologies of the system. The $H_2$ produced from power that is not supplied by the renewable units is referred to as non-green Hz. Because of the connection between the grid and the system, the grid may be referred to, for the sake of efficiency, as being a technology of the system, although the grid is not *per se* a part of the system but rather connected thereto. The hybrid system may further comprise a $H_2$ storage. The hybrid system may further comprise a reactor, that converts $H_2$ into $H_2$ derivative(s). $H_2$ derivative(s) converted from green $H_2$ is/are referred to as green $H_2$ derivative(s). The system may further comprise a battery (or several batteries, but only one battery is discussed in the following, for the sake of efficiency) for storing excesses of electrical power and/or supplying electrical power when needed. The system may further comprise a PGU (power generating unit, for example a gas turbine), or several PGU, but only one PGU is discussed in the following, for the sake of efficiency. The PGU supplies non-green power.

The method may comprise selecting the technologies of the system prior to the optimization, *i.e.* selecting the technologies to be accounted for in the optimization. This selection may be performed by the user and allows to test and optimize various configurations of the system.

The method comprises providing inputs to the optimization. The inputs include the constraints and the objective function. The constraints are constraints to the optimization, *i.e.* the optimization modifies the value of the free variables so as to reach, or at least tend to reach, an optimal value of the objective function, but while respecting the constraints. The objective function is the function to be optimized by the optimization, *i.e.* the optimization modifies the values of the free variables so that the function reaches, or at least tends to reach, its optimal value, for example by becoming sufficiently close to the optimal value with respect to a convergence criterion.

The constraints include one or more constraints each related to a $H_2$ and/or $H_2$ derivative demand over a predetermined time period, *i.e.* one or more constraints each constraining the system (*i.e.* while optimize) in terms of meeting a given $H_2$ (if the system is for Hz production) and/or $H_2$ derivative (if the system is for $H_2$ derivative production) demand requirement over the predetermined time period. The one or more constraints each related to a $H_2$ demand over a predetermined time period may include one or more of:

- an hourly $H_2$ and/or $H_2$ derivative demand rule, *i.e.* a rule that requires the system to meet hourly a given production of $H_2$ and/or $H_2$ derivative;
- a daily $H_2$ and/or $H_2$ derivative demand rule, *i.e.* a rule that requires the system to meet daily a given production of $H_2$ and/or $H_2$ derivative; and/or
- an annual $H_2$ and/or $H_2$ derivative demand rule, *i.e.* a rule that requires the system to meet annually a given production of $H_2$ and/or $H_2$ derivative.

The annual $H_2$ and/or $H_2$ derivative demand rule may be an equation that forces the total downstream $H_2$ and/or $H_2$ derivative delivery over a year to be equal to a given demand value (*e.g.* provided by a user at the providing of the constraints).

The hourly $H_2$ and/or $H_2$ derivative demand rule may include a minimal hourly demand rule and/or a maximal hourly demand rule, for example consisting in an inequation that forces the hourly downstream $H_2$ and/or $H_2$ derivative delivery to be larger than a given minimal demand value (*e.g.* provided by a user at the providing of the constraints) and/or an inequation that forces the hourly downstream $H_2$ and/or $H_2$ derivative delivery to be smaller than a given maximal demand value (*e.g.* provided by a user at the providing of the constraints). The hourly $H_2$ and/or $H_2$ derivative demand rule may additionally or alternatively include a minimal ramp-up rule and/or a maximal ramp-down rule. This may consist in an inequation that forces the downstream $H_2$ and/or $H_2$ derivative delivery at each time step to be larger than a given minimal ramp value (*e.g.* provided by a user at the providing of the constraints) and/or an inequation that forces the downstream $H_2$ and/or $H_2$ derivative delivery at each time step to be smaller than a given maximal ramp value (*e.g.* provided by a user at the providing of the constraints).

The daily $H_2$ and/or $H_2$ derivative demand rule may include a minimal daily demand rule and/or a maximal daily demand rule, for example consisting in an inequation equation that forces the daily downstream $H_2$ and/or $H_2$ derivative delivery to be larger than a given minimal demand value (*e.g.* provided by a user at the providing of the constraints) and/or an inequation that forces the daily downstream $H_2$ and/or $H_2$ derivative delivery to be smaller than a given maximal demand value (*e.g.* provided by a user at the providing of the constraints).

The one or more constraints each related to a $H_2$ and/or $H_2$ derivative demand over a predetermined time period may further include one or more fluctuation rules over the predetermined time period. These one or more rules may comprise or consist in one or more of the following rules:

- a rule limiting the number of changes of the downstream flow(s) of $H_2$ and/or $H_2$ derivative, for example in the form of an inequation forcing this number of changes to be lower than a predefined maximal value (which for example may be provided by a user at the providing of the constraints);
- a rule tagging an hour when a ramp down at the downstream flow(s) occurs; and/or
- a rule tagging an hour when a ramp up at the downstream flow(s) occurs.

Additionally or alternatively, the constraints include one or more constraints related to technologies of the hybrid system that are involved in the green $H_2$ and/or $H_2$ derivative production and/or conversion. These one or more constraints may comprise any constraint or set of constraints regarding the functioning of these technologies, such as one or any combination of production rules, power consumption rules, charge time rules, power variation rules, capacity rules, storage rules, charge and discharge rules, and/or operation rules.

The constraints thus include the one or more constraints related the $H_2$ and/or $H_2$ derivative demand over a predetermined time period, or the one or more constraints related to technologies of the hybrid system that are involved in the green $H_2$ and/or $H_2$ derivative production and/or conversion, or both of these constraints. For example, the one or more constraints related the $H_2$ and/or $H_2$ derivative demand over a predetermined time period may be part of the constraints and are thus constraint to enforce in the optimization, and not variables to be modified during the optimization. In this case, the optimization may for example optimize the sizing of the renewable part of the system for meeting this demand constraint. Alternatively, this sizing may be a constraint to enforce during the optimization, and the $H_2$ and/or $H_2$ derivative demand may be a free variable to optimize for this fixed sizing. Yet alternatively, both this sizing and this demand may be constraints.

The one or more constraints related to technologies of the hybrid system that are involved in the green $H_2$ and/or $H_2$ derivative production and/or conversion may include one or more of:

- a photovoltaic plant production rule, *i.e.* a rule that defines the power production by the photovoltaic plant, *e.g.* in the form of a formula yielding the power produced by the photovoltaic at each time step;
- a wind farm production rule, *i.e.* a rule that defines the power production by the wind farm, *e.g.* in the form of a formula yielding the power produced by the wind farm at each time step;
- one or more constraints related to an electrolyzer of the system, including a power consummation rule during production and/or conversion when the electrolyzer is turned off (*i.e.* a rule, for example in the form of a formula or a set of formulas, defining the power consumed by the electrolyzer to keep the stacks hot, during production of green Hz for sole $H_2$ production and/or for downstream Hz conversion into $H_2$ derivatives, when the electrolyzer is turned off/in standby mode), a power variation rule of the electrolyzer (*i.e.* a rule, for example in the form of an inequation, defining the maximum and minimum power variations that the electrolyzer can accept), a water treatment consumption rule (*i.e.* a rule, for example in the form of a formula, defining the power used for water treatment, as the electrolyzer may need high purity water to produce $H_2$), and/or a capacity rule of the electrolyzer (*i.e.* a rule, for example in the form of one or more inequations, defining the operating range of the electrolyzer);
- a charge time rule for a battery of the system (*i.e.* a rule defining the moments of charge and of discharge of the battery, as the battery cannot be charged or discharged during the same time step), a state-of-charge rule of the battery (*e.g.* a rule defining, for example in the form of an equation, an energy balance between the energy charged, discharged, and the previous state of charge), a state-of-charge end rule of the battery (*e.g.* a rule forcing the state of charge at the end of the year to be equal to the state of charge at the first time step), and/or a capacity rule of the battery (*e.g.* a rule defining, for example in the form of one or more inequalities, a usable percentage of the battery capacity);
- an hourly grid energy purchase and/or injection rule, and/or an annual maximal grid energy purchase rule. The hourly grid energy purchase and/or injection rule may include or consist in a rule defining a maximum energy that can be purchased hourly from the grid and/or a rule defining a maximum energy that can be sold hourly to the grid, and/or a rule preventing to buy and sell energy on the grid at the same time step. The rule defining the maximum energy that can be purchased hourly from the grid may for example be an inequation forcing the energy purchased hourly from the grid to be lower than a predefined maximal value (which may be provided by a user at the providing of the constraints) and/or the rule defining the maximum energy that can be sold hourly from the grid may for example be an inequation forcing the energy sold hourly from the grid to be lower than a predefined maximal value (which may be provided by a user at the providing of the constraints). The annual maximal grid energy purchase rule may be rule defining a maximum energy that can be purchased from the grid per year (*e.g.* in the form of an inequation constraining the energy purchased from the grid over a year to be lower than a maximal value, which for example can be provided by a user at the providing of the constraints); and/or

- a $H_2$ storage maximal charge and discharge rule (*i.e.* a rule enforcing a maximal charge and discharge for the $H_2$ storage, for example as flow constraints), a Hz state-of-charge rule (*e.g.* a rule, for example a set of equations, describing a balance between the charge, the discharge, and the previous state of charge), and/or an electricity consumption for $H_2$ storage rule (for example in the form of a formula yielding the electricity consumed for storage depending of the amount of Hz stored).

It is to be understood that for each one of the above rule, the rule may be comprised in the constraints only when the corresponding technology, that is the technology concerned by the rule, is comprised by the hybrid system.

The green $H_2$ and/or $H_2$ derivative production and/or conversion may consist in at least $H_2$ derivative production (that is, the hybrid system delivers at least green $H_2$ derivative, but may in addition deliver green $H_2$). In this case, the one or more constraints related to technologies of the hybrid system may further include a PGU power production rule and/or a PGU activation rule. Thus, the hybrid system technologies comprise in such a case a PGU (power generating unit). The PGU power production rule may be a rule defining, for example in the form of an equation or formula, the power produced by the PGU using Hz from storage. The PGU activation rule may be a rule, such as an inequation, enforcing activation of the PGU only when the renewable energy available is lower than the power of the PGU.

Still in the case where the green $H_2$ and/or $H_2$ derivative production and/or conversion consists at least in $H_2$ derivative production, the constraints may further include one or more of:

- a $H_2$ derivative production rule, for example a rule for enforcing a given $H_2$ derivative production, for example based on an imposed constant conversion ratio between $H_2$ derivative and $H_2$;
- a power consumption rule for $H_2$ derivative production, such as one or more formulas yielding the value of power consumption for $H_2$ derivative production, for example including one or more formulas based on an efficiency curve and/or one or more formulas using a constant efficiency proportional to $H_2$ consumption;
- a reactor capacity rule, for example in the form of formulas yielding the maximum flow of $H_2$ for the reactor; and/or
- one or more reactor operation rules, that is rules each enforcing respect of a given specification or setting of the reactor.

The constraints may further include energy balance constraints and/or mass balance constraints, such as one or more equations describing energy balance and/or one or more equations describing mass balance.

The green $H_2$ and/or $H_2$ derivative production and/or conversion may consists in at least green Hz production (that is, the system produces green Hz and may optionally produce in addition derivatives thereof).

In this case, the energy balance constraints may include:

- an energy balance equation for renewable energy, *i.e.* an equation that describes energy balance for the renewable part of the hybrid system;
- a grid energy balance equation, *i.e.* an equation that describes energy balance for the grid part of the hybrid system;
- a battery state of charge equation (which may be the battery state of charge rule previously discussed), such as a rule defining, for example in the form of an equation, an energy balance between the energy charged, discharged, and the previous state of charge; and
- an electrolyzer stand-by-mode consumption rule, *i.e.* a rule, such as an equation, describing the consumption of the electrolyzer in stand-by mode.

Still in this case, additionally or alternatively, the mass balance constraints may include:

- a green and non-green $H_2$ production distinction rule, for example consisting in an equation describing the mass of green $H_2$ produced and an equation describing the mass of non-green Hz produced;
- a balance rule for $H_2$ storage (for example, the previously-discussed balance rule between the charge, the discharge, and the previous state of charge); and
- a balance rule for $H_2$ directly delivered and $H_2$ stored, such as one or more equations describing a balance between $H_2$ that is directly delivered and $H_2$ that is stored.

As previously discussed, the green $H_2$ and/or $H_2$ derivative production and/or conversion may consist in at least $H_2$ derivative production

In such a case, the energy balance constraints may include:

- an energy balance equation for renewable energy, *i.e.* an equation that describes energy balance for the renewable part of the hybrid system;
- a battery state of charge equation (which may be the battery state of charge rule previously discussed), such as a rule defining, for example in the form of an equation, an energy balance between the energy charged, discharged, and the previous state of charge; and

- a grid energy balance equation *i.e.* an equation that describes energy balance for the grid part of the hybrid system.

Still in this case, additionally or alternatively, the mass balance constraints may include:

- a $H_2$ production rule, for example in the form of a formula yielding the mass of $H_2$ produced;
- a water treatment rule, for example in the form an balance equation linking the power used for water treatment, the $H_2$ produced, and the;
- a balance rule for $H_2$ storage (for example, the previously-discussed balance rule between the charge, the discharge, and the previous state of charge);
- a balance rule for $H_2$ derivative production; and
- a balance rule for $H_2$ directly consumed by conversion reactor and stored, such as one or more equations describing a balance between $H_2$ that is consumed by the conversion reactor and $H_2$ that is stored.

The constraints may be provided by a user. For example, the user may select constraints within a predefined list of constraints, defining the constraints himself/herself, and/or providing predetermined values/numbers/constants involved in the constraints (for example by selecting these values). Alternatively, at least some constraints may be predefined (*i.e.* provided by the system executing the method) and the other constraints may be provided by the user.

The inputs further comprise an objective function. The objective function may be predefined and thus provided by the computer system. The objective function is a function that quantifies a rate of the green $H_2$ and/or $H_2$ derivative production and/or conversion by only renewable technologies of the hybrid system. In other words, the function quantifies the rate of production of the green $H_2$ and/or the derivatives thereof by the renewable technologies of the system and no other technologies. The objective function depends on the free variables of the optimization, for example directly, or for example indirectly (*i.e.* the objective function depends on intermediate variables or terms that themselves depend on the free variables).

The free variables include a green $H_2$ and/or $H_2$ derivative production capacity of an electrolyzer of the hybrid system and operational variables for mass and power exchanges between the technologies of the hybrid system. The green $H_2$ and/or $H_2$ derivative production capacity of an electrolyzer of the hybrid system is the capacity of the electrolyzer to produce $H_2$ to be delivered by the hybrid system and/or $H_2$ to be transformed into $H_2$ derivatives then delivered by the hybrid system. The operational variables for mass and power exchanges between the technologies of the hybrid system are variables representing (*e.g.* all the) flows of power and/or of matter within the hybrid system. These variables may comprise or consist in all the variables that depend on the time. The free variables further include a renewable power production capacity of the hybrid system, for example in the form of variables representing a capacity of the renewable technologies (*e.g.* a power production capacity). The free variables may further include the variables that represent a BESS and/or $H_2$ storage capacity, and/or variables that represent a capacity of a conversion system for production of $H_2$ derivatives.

The method further comprises optimizing the objective function based on the constraints, said free variables being the free variables of the optimization. This means that the method searches for values of the free variables for which the constraints are respected and the value of the objective function is optimal or tends to be optimal (*e.g.* with respect to a convergence criterion). This optimization is performed using a MILP (Mixed-Integer Linear Programming) optimization method. Any MILP may be used. The concept of MILP optimization is well known and need not being further discussed. The MILP optimization is based on a linear formulation of the constraints. This means that the MILP optimization accounts for the constraints but formulated linearly. The constraints which are already linear when provided (which in examples may be all of the constraints) (*i.e.* are provided already with a linear formulation) are directly used in the optimization. The constraints may also include (or consist in) non-linear constraints, and in this case the method further comprises, before the optimization, linearizing the non-linear constraints. Linearizing a constraint means determining or providing a linear expression of the constraint and/or of a parameter therein. For example, for the constraints using specifications curves of technologies of the hybrid system (*e.g.* efficiency curves as discussed hereinbelow), linearizing may comprise performing a linearization by parts of these curves.

Implementations of the method are now discussed. These implementations notably discuss mathematical formulations of the constraints, variables, and of the objective function. It is to be understood that these mathematical formulations may be used for any of the constraints, variables and objective function already described hereinabove, or any combination thereof, independently of the other/remaining mathematical formulations discussed in the implementations.

It is first discussed implementations where the hybrid system is for green $H_2$ production. The first-discussed implementations (also referred to as "first implementations hereinbelow") concern the optimization of the system in the case where the percentage of green $H_2$ has to reach a minimum value over one year. Optionally, the optimization may include maximizing the net revenues.

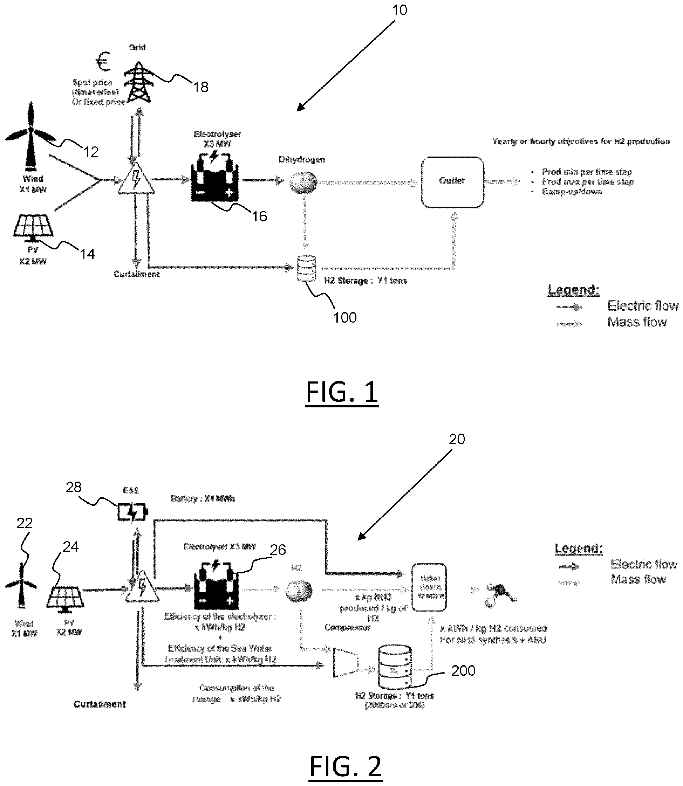

FIG. 1 shows a schematic illustration of an example of such hybrid system 10. As illustrated on FIG. 1, the technologies comprise renewable power generating units, namely a wind farm 12 and a photovoltaic plant 14. The technologies also comprise an electrolyzer 16, to which the renewable power generating units 12 and 14, and optionally the grid 18, supply power. The renewable power generating units 12 and 14, and optionally the grid 18, also supply power to an $H_2$ storage 100. The renewable power generating units 12 and 14 may also supply (sell) power to the grid 18, and a curtailment may as well be implemented, as shown on FIG. 1. As illustrated on FIG. 1, the electrolyzer produces $H_2$, the $H_2$ being obtained at least in part from the power supplied by the renewable power generating units 12 and 14, this at least a part of the produced $H_2$ being green $H_2$. At least a part of the produced $H_2$ is sent to storage 100, and the remaining part is delivered as outlet by the hybrid system. As shown on FIG. 1, the free variables include in these implementations the power production capacity of the wind farm 12 (X1 MW), the power production capacity of the photovoltaic plant 14 (X2 MW), the production capacity of the electrolyzer 16 (X3 MW), and the storage capacity of the storage 100 (Y1 tons). The constraints may in these implementations be formulated based on values of the parameters that include a minimum production of $H_2$ per time step, a maximum production of $H_2$ per time step, ramp-up/down rules, and a spot price or fixed price for the grid power, as shown on FIG. 1. In the hereinbelow discussion regarding the first-discussed implementations, RFNBO refers to the renewable fuels of non-biological origins and to the Hz produced by only renewable energies. As can be seen on the figure, the Hz demand ("yearly or hourly objectives for $H_2$ production) is in the implementations illustrated by FIG. 1 a free variable.

The parameters involved in the first implementations are listed in the following tables.

| Parameter | Units | Description |
|---|---|---|
| $QP_{pv}^{ref}$ | MW | Reference capacity for PV plant (related to the input timeseries) |
| $pv_{availability}$ | [0,1] | Availability of the PV plant over the time |
| $cost_{PPA}^{pv}$ | $.MWh^{-1}$ | cost of PPA contract for pv |

*Table 1: parameters related to the photovoltaic plant*

| Parameter | Units | Description |
|---|---|---|
| $QP_{wind}^{ref}$ | MW | Reference capacity for wind farm (related to the input timeseries) |
| $wind_{availability}$ | [0,1] | Availability of the wind farm over the time |
| $cost_{PPA}^{wind}$ | $.MWh^{-1}$ | cost of PPA contract for wind |

*Table 2: parameters related to the wind farm*

| Parameters | Units | Description |
|---|---|---|
| $QP_{ely}$ | MW | Nominal power of the electrolyzer |
| $variation_{ely}^{max}$ | [0,1] | maximum variation of electrolyzer between 2 timesteps |
| $load_{ely}^{max}$ | [0,1] of $QMH2$ | Minimum Power |
| $load_{ely}^{min}$ | [0,1] of $QMH2$ | Maximum Power |
| $P_{ely}^{standby}$ | MW | Power consummed when the electrolyzer is not producing H2 during 1 hour |
| $ratio_{prod}$ | ton H2/MWh | ratio of conversion from Power to $H_2$ ($1/nom_{efficiency}^{ely}$) |
| $cost_{capex}^{ely}$ | $/kW | power capex for the electrolyzer |
| $cost_{opex}^{ely}$ | $/kW | power opex for the electrolyzer |

*Table 3: parameters related to the electrolyzer*

| Parameters | Units | Description |
|---|---|---|
| $QMH2_{storage}$ | ton H2 | Capacity of the storage |
| $elec_{compressor}^{cons}$ | MWh/ton H2 | Consumption of the electrolyzer for the storage |
| $nom_{efficiency}^{ely}$ | MWh/ton H2 | Electric consumption of the electrolyzer to produce 1 kg of $H_2$ |
| $ratio_{prod}$ | ton H2/MWh | ratio of conversion from Power to $H_2$ ($1/nom_{efficiency}^{ely}$) |
| $qH2_{storage}^{max}$ | tons.$time_{step}$ | Constraint on the maximum flow of charge/discharge |
| $cost_{capex}^{h2,stor}$ | \$/kW | power capex for the H2 storage |
| $cost_{opex}^{h2,stor}$ | \$/kW | power opex for the H2 storage |

*Table 4: parameters related to the $H_2$ storage*

| Parameters | Units | Description |
|---|---|---|
| $rt_{efficiency}$ | % | round trip efficiency |
| $\eta_{eff,dis,Bess}$ | % | $\frac{1}{\sqrt{rt_{efficiency}}}$ |
| $\eta_{eff,ch,Bess}$ | % | $\sqrt{rt_{efficiency}}$ |
| $soc_{bess}^{max}$ | %.$h^{-1}$ | maximum energy that can be stored |
| $soc_{bess}^{min}$ | %.$h^{-1}$ | minimum soc of the battery |
| $init_{bess}^{soc}$ | % | state of charge of the battery at the initial step |
| $init_{bess}^{rfnbo_{soc}}$ | % | state of charge of the battery at the initial step(green energy) |
| $P_{bess}^{max,charge}$ | % | maximum flow of energy charged in the battery during 1h |
| $P_{bess}^{max,discharge}$ | % | maximum flow of energy discharged during 1h |
| $cost_{capex}^{bess}$ | \$.$kW^{-1}$ | capex power for the battery |
| $cost_{opex}^{bess}$ | \$.$kW^{-1}$.$year^{-1}$ | opex power for the battery over one year |

*Table 5: parameters related to the battery*

| Variables | Units | Description |
|---|---|---|
| $P_{grid}^{ch,max}$ | MW | Maximum power that can be purchased from the grid |
| $P_{grid}^{dis,max}$ | MW | Maximum power that can be sold to the grid |
| $rate_{RFNBO}$ | [0,1] | Ratio of energy produced only by renewables on the grid |
| $Maximum_{import,grid}^{annual}$ | MWh/year | Maximum quantity of energy purchased per year |

*Table 6: parameters related to the grid*

| Variables | Units | Description |
|---|---|---|
| $min_{ely}^{load,factor,targeted}$ | [0,1] | minimum average load factor of the electrolyzer over one year |
| $min_{prod,h2}^{ren}$ | tons H2 | Minimum production of H2 from on-site renewables |
| $RFNBO_{targeted}$ | [0,1] | Minimum average rate of RFNBO targeted over the time horizon |

*Table 7: optimization parameters*

| Parameters | Units | Description |
|---|---|---|
| $nb_{years}$ | years | lifetime of the project |
| $daily^{prod}_{min}$ | tons $H_2$ | minimum daily production |
| $daily^{prod}_{max}$ | tons $H_2$ | maximum daily production |
| $hourly^{prod}_{min}$ | tons $H_2$ | minimum hourly production |
| $hourly^{prod}_{max}$ | tons $H_2$ | maximum hourly production |
| $max^{ramp}_{hourly}$ | tons $H_2$ | maximum variation at the outlet between 2 time steps |
| $max^{change,period}_{nb}$ | integer $H_2$ | maximum number of changes in the downstream flow over a certain amount of time |
| $time^{demand}_{flexibility}$ | hours $H_2$ | period of time consider to tag the H2 downstream flow |
| $price^{RFNBO}_{h2}$ | $\$.kg^{-1} h_2$ | price of H2 from RNFBO that can be sold |
| $price^{not,RFNBO}_{h2}$ | $\$.kg^{-1} h_2^{-1}$ | price of H2 from not RNFBO that can be sold |
| $price^{grid}_{elec}$ | $\$.MWh^{-1}$ | price of electricity that can be sold to the grid |

*Table 8: Settings & Objectives*

The variables involved in the first implementations are listed in the following tables. It is to be understood that the free variables of the optimization may be selected (*e.g.* by a user) within these below variables, and that therefore some of the below variables may not be selected as free variables, *e.g.* may be fixed or may not be present at all (for example if the corresponding technology is not present).

| Variables | Units | Description |
|---|---|---|
| $P^n_{pv}$ | $MW$ | Power of the pv plant at timestep n |
| $QP_{pv}$ | $MW$ peak | Nominal power of the plant |

*Table 9: variables related to the photovoltaic plant*

| Variables | Units | Description |
|---|---|---|
| $P^n_{wind}$ | $MW$ | Power of Windfarm at timestep n |
| $QP_{wind}$ | $MW$ peak | Nominal power of the farm |

*Table 10: variables related to the wind farm*

| Variables | Units | Description |
|---|---|---|
| $P^{grid,n}_{ely}$ | MW | Power of the ely with energy provided by grid |
| $P^{ren,n}_{ely}$ | MW | Power of the ely with energy provided from the grid |
| $P^n_{water,treatment}$ | MW | Power of the Water treatment unit with energy provided by renewables |
| $P^{grid,n}_{water,treatment}$ | MW | Power of the Water treatment unit with energy provided by the grid |
| $P^{stop,n}_{ely}$ | MW | Power consummed by the electrolyzer when it's turned off |
| $bin^n_{ely}$ | Binary | the value is 1 when the electrolyzer is operating |
| $MH2_{ely}$ | t $H_2.h^{-1}$ | hydrogen produced by ely (not RFNBO) |
| $MH2^{ds}_{ely}$ | t $H_2.h^{-1}$ | hydrogen directly provided by ely to the downstream (not RFNBO) |
| $MH2^{RFNBO}_{ely}$ | t $H_2.h^{-1}$ | hydrogen produced by ely (RFNBO) |
| $MH2^{ds,RFNBO}_{ely}$ | t $H_2.h^{-1}$ | hydrogen directly provided by ely to the downstream (RFNBO) |
| $capex^{ely}$ | $\$$ | Capex for the electrolyzer |
| $opex^{ely}$ | $\$$ | Opex for the electrolyzer |
| $cost^{ely}$ | $\$$ | global cost for the electrolyzer |

*Table 11: variables related to the electrolyzer*

11

| Variables | Units | Description |
|---|---|---|
| $QMH2_{stor}$ | ton $h_2$ | Capacity of the hydrogen storage |
| $soc_{h2}^{stor}$ | ton | Soc h2 storage (not RFNBO) |
| $soc_{h2,RFNBO}^{stor}$ | ton | Soc h2 storage RFNBO) |
| $MH2_{stor}^{ch}$ | ton.$h^{-1}$ | Flow of hydrogen from ely to storage (not RFNBO) |
| $MH2_{stor}^{dis}$ | ton.$h^{-1}$ | Flow of hydrogen from storage to downstream (not RFNBO) |
| $MH2_{stor}^{ch,RFNBO}$ | ton.$h^{-1}$ | Flow of hydrogen from ely to storage (RFNBO) |
| $MH2_{stor}^{dis,RFNBO}$ | ton.$h^{-1}$ | Flow of hydrogen from storage to downstream (RFNBO) |
| $p_{stor}^{h2,ren}$ | MW | power consumed by storage from renewables |
| $p_{stor}^{h2,grid}$ | MW | power consumed by storage from grid |
| $bin\_P_{h2,stor}^{activated,pos}$ | Binary | 1 is when hydrogen is charged in the storage and 0 for discharge |
| $capex^{h2,stor}$ | \$ | Capex for the H2 storage |
| $opex^{h2,stor}$ | \$ | Opex for the H2 storage |
| $cost^{h2,stor}$ | \$ | global cost for the H2 storage |

*Table 12: variables related to the $H_2$ storage*

| Variables | Units | Description |
|---|---|---|
| $QE_{bess}$ | MWh | Capacity of battery |
| $soc_{bess}^{n}$ | MWh | Soc battery storage |
| $soc_{bess}^{rfnbo,n}$ | MWh | Soc battery storage(green energy) |
| $P_{bess}^{ch,n}$ | MW | Power charged in the battery |
| $P_{bess}^{dis,n}$ | MW | Power discharged in the battery |
| $P_{bess}^{rfnbo,ch,n}$ | MW | Power charged in the battery(green energy) |
| $P_{bess}^{rfnbo,dis,n}$ | MW | Power charged in the battery(green energy) |
| $bin_{bess}^{pos}$ | Binary | 1 is when the battery is charged and 0 for discharged |
| $capex_{bess}$ | \$ | Global capex related to the battery |
| $opex_{bess}$ | \$ | Global opex related to the battery |

*Table 13: variables related to the battery*

| Variables | Units | Description |
|---|---|---|
| $P_{grid}^{ch}$ | MW | Power that is purchased from the grid |
| $P_{grid}^{dis}$ | MW | Power that is sold to the grid |

*Table 14: variables related to the grid*

| Variables | Units | Description |
|---|---|---|
| $MH2_{ely}^{ds}$ | ton.$h^{-1}$ | Flow of hydrogen from electrolyzer to downstream (not RFNBO) |
| $MH2_{ely}^{ds,RFNBO}$ | ton.$h^{-1}$ | Flow of hydrogen from electrolyzer to downstream (RFNBO) |
| $bin_{change}^{demand,n}$ | Binary | Binary used to tag a change in the downstream flow of H2 |
| $MH2_{supply}^{tot,n}$ | ton.$h^{-1}$ | Total H2 delivery over one hour |
| $MH2_{supply}^{tot,d}$ | ton.$day^{-1}$ | Total H2 delivery over one day |

*Table 14: variables related to the downstream flow and delivery*

| Variables | Units | Description |
|---|---|---|
| $revenue_{h2}$ | \$.year | Total revenue from the sale of H2 (RFNBO + not RFNBO) |
| $cost_{grid}$ | \$.year | Cost due to the sale or the purchase of electricity from the grid |
| $cost_{pv}$ | \$.year | Cost due the purchase of electricity from the pv plant |
| $cost_{grid}$ | \$.year | Cost due to the purchase of electricity from the wind farm |
| $cost_{bat}$ | \$.year | "annual cost" of the battery (considering CAPEX/OPEX) |
| $cost_{ely}$ | \$.year | "annual cost" of the electrolyzer (considering CAPEX/OPEX) |
| $cost_{H2,storage}$ | \$.year | "annual cost" of the H2 storage (considering CAPEX/OPEX) |

*Table 15: variables related to cost and revenue*

The constraints of the first implementations are now presented, for examples where the system comprises the following technologies: hydrogen storage, electrolyzer, photovoltaic plant, wind farm, and a grid connection. However, if one technology is not used in or not part of the hybrid system (*e.g.* not selected by the user), the constraints corresponding to these technology are not used in the optimization, except for the constraints related to the electrolyzer, which are mandatorily present as the aim of the algorithm is to produced green hydrogen.

The constraints include constraints related to the technologies of the hybrid system that are involved in the green $H_2$ and/or $H_2$ derivative production and/or conversion.

These constraints include constraints related to the photovoltaic plant of the hybrid system, which include the previously-discussed photovoltaic plant production rule. In implementations, this rule is implemented as follows: the power of the PV (photovoltaic) plant is calculated at each time step using the reference capacity (given by the timeseries) and the real size of the plant (which can be a variable or a parameter). In example, if the parameter "var" in $optim_{feature}$ is "true", the size is a variable, otherwise it is a parameter. The photovoltaic plant production rule is in implementations:

$$P_{pv}^n = P_{pv}^{ref,n} * pv_{availability} \times \frac{QP_{pv}}{QP_{pv}^{ref}}$$

The constraints related to the photovoltaic plant further includes in implementations the total cost of the plant for the system. The economic contribution for PV technology is an OPEX using a PPA price. The constraint of total cost of PV is in implementations:

$$Cost_{pv} = \sum_{i=1}^{n} (P_{pv}^n) \times cost_{PPA}^{pv}$$

The constraints related to the technologies include constraints related to the wind farm of the hybrid system. As previously discussed, these include a wind farm production rule. In implementations, the power of the wind farm is calculated at each time step using the reference capacity (given by timeseries) and the real size of the plant (which can be a variable or a parameter depending on the optimization problem). If the parameter "var" in $optim_{feature}$ is "true", the size is a variable, otherwise it is a parameter. The wind farm production rule is in implementations:

$$P_{wind}^n = P_{wind}^{ref,n} * wind_{availability} \times \frac{QP_{wind}}{QP_{wind}^{ref}}$$

The constraints related to the wind farm further includes in implementations the total cost of the wind farm for the system. The economic contribution for wind technology is an OPEX using a PPA price. The constraint of total cost of wind is in implementations:

$$Cost_{wind} = \sum_{i=1}^{n} (P_{wind}^n) \times cost_{PPA}^{wind}$$

The constraints related to the electrolyzer are now discussed. To the simplify the equations, the variable $P_{ely}^n$ is used and represents the total power of the electrolyzer at time step $n$. The total power of the electrolyzer is given by the following formula (although this formula may not be directly computer in implementations):

$$Power_{electrolyseur}(t) = P_{electrolyseur}^{grid}(t) + P_{electrolyseur}^{ren}(t)$$

The power consumption rule of the electrolyzer during production and/or conversion when the electrolyzer is turned off is in implementations:

$$Prod_{H2}(t) \leq 10^{12} \times bin_{electrolyseur}(t)$$

$$P_{electrolyseur}^{stop}(t) = (1 - bin_{electrolyseur}(t)) \times p_{ely}^{standby}$$

The electrolyzer consumes electricity during standby mode to keep the stacks hot, and this consumption is activated in the above formula using binaries.

The power variation rule of the electrolyzer models the maximum and minimum power variations that can be supported by the technology, and is in implementations:

$$|Power_{electrolyseur}(t) - Power_{electrolyseur}(t-1)| \leq variation_{ely}^{max} \times QP_{ely}$$

The capacity rule of the electrolyzer is in implementations:

$$load_{ely}^{min}.QP_{ely} - 10^{12} * (1 - bin_{electrolyseur}(t)) \leq Power_{electrolyseur}(t) \leq QP_{ely}.load_{ely}^{max}$$

The minimum and maximum load define the operating range of the electrolyzer. For the minimum load, a binary is used to bypass this constraints when the electrolyzer is turned-off.

The constraints related to the electrolyzer further include in implementations a CAPEX and OPEX rule, the economic variables used for the electrolyzer being CAPEX and OPEX (fixed), the rule being:

$$capex_{ely} = cost_{capex}^{ely} \times QP_{ely}$$

$$opex_{ely} = cost_{opex}^{ely} \times QP_{ely}$$

The constraints related to the electrolyzer further include in implementations a total cost of the electrolyzer, computed using the project lifetime and iterating using the same year:

$$cost_{ely} = \frac{capex_{ely}}{nb_{years}} + opex_{ely}$$

The constraints related to the grid are now discussed.

The hourly grid energy purchase rule is the following inequality (hourly constraint) and defines the maximum energy that can be purchased hourly from the grid:

$$P_{grid}^{ch} \leq P_{grid}^{ch,max}$$

The hourly grid energy injection rule is the following inequality (hourly constraint) and defines the maximum energy that can be sold hourly to the grid:

$$P_{grid}^{dis} \leq P_{grid}^{dis,max}$$

The annual maximal grid energy purchase rule is the following inequality and defined a maximum quantity of energy which can be purchased from the grid per year:

$$\sum_{t=1}^{end} P_{ch}^{grid}(t) \leq Maximum_{import,grid}^{annual}$$

The constraints related to the grid further include in implementations the total cost of the grid for the system, which is the difference between the revenues and the purchase on the grid and which is expressed as follows:

$$cost_{grid} = \sum_{i=1}^{n} (P_{grid}^{ch,n} \times grid_{cost}^{n} - P_{grid}^{dis,n} \times price_{elec}^{grid})$$

The constraints related to the battery are now discussed.

These constraints include a charge time rule of the battery, which expresses that the battery cannot be charged or discharged during the same time step, and which is given by the following inequalities:

$$P_{bess}^{dis} + P_{bess}^{dis,rfnbo} \leq 10^6 \times (1 - bin_{bess}^{activated,pos})$$

$$P_{bess}^{dis} + P_{bess}^{dis,rfnbo} \times \frac{time_{step}}{60} \leq C_{rate} \times QE_{bess}$$

$$P_{bess}^{ch} + P_{bess}^{ch,rfnbo} \leq 10^6 \times bin_{bess}^{activated,pos}$$

$$P_{bess}^{ch} + P_{bess}^{ch,rfnbo} \times \frac{time_{step}}{60} \leq C_{rate} \times QE_{bess}$$

The state-of-charge rule of the battery is now discussed. The battery state of charge is an energy balance between the energy charged, discharged and the previous state of charge. The charging and discharging flows are considering an efficiency which is a root square of the round trip efficiency. The variables have been split to consider hydrogen produced thanks to RFNBO energy and not RFNBO. RFNBO refers to $H_2$ produced with renewables energy. The state-of-charge rule of the battery is in implementations given by the following equations:

$$Soc_{bess,t-1} + P_{bess}^{ch} \times \eta_{eff,ch,Bess} \times \frac{time_{step}}{60} = Soc_{bess,t} + P_{bess}^{dis} \times \frac{time_{step}}{60} \times \eta_{eff,dis,bess}$$

$$Soc_{bess,t-1}^{rfnbo} + P_{bess}^{rfnboch} \times \eta_{eff,ch,Bess} \times \frac{time_{step}}{60} = Soc_{bess,t}^{rfnbo} + P_{bess}^{rfnbodis} \times \frac{time_{step}}{60} \times \eta_{eff,dis,bess}$$

The capacity rule of the battery expresses that, in the battery, only a percentage of the capacity of the battery is usable. This usable part is defined with the maximal state of charge ($soc_{max}$) rule:

$$Soc_{bess,t} + Soc_{bess,t}^{rfnbo} \leq QE_{bess} \times soc_{max}$$

and with and the minimal state of charge ($soc_{min}$) rule:

$$Soc_{bess,t} + Soc_{bess,t}^{rfnbo} \geq QE_{bess} \times soc_{min}$$

The constraints related to the battery may further include a CAPEX and OPEX rule of the battery, where the CAPEX and OPEX per year are considered using a parameter proportional to the installed capacity:

$$Capex_{bess} = QP_{bess} \times cost_{capex}^{bess} \times 10^3$$

$$Opex_{bess} = QP_{bess} \times cost_{Opex}^{bess} \times 10^3$$

The constraints related to the battery may further include a total cost of the battery:

$$cost_{bess} = \frac{capex_{bess}}{nb_{years}} + opex_{bess}$$

The constraints related to $H_2$ storage are now discussed. In the following, The charge represents the flow which goes to the Hz storage and the discharge represents the flow out of the storage, i refers to charge or discharge.

The $H_2$ storage maximal charge and discharge rule (flow constraints on $MH2_{stor}^{ch}$ and $MH2_{stor}^{dis}$) is in implementations the following:

$$MH2_{stor,t}^{i} + MH2_{stor,t}^{i,RFNBO} \leq qH2_{storage}^{max} \times bin\_P_{h2,stor}^{activated,pos}$$

The Hz state-of-charge rule is now discussed. The variables are split to consider hydrogen produced thanks to RFNBO energy and not RFNBO. RFNBO refers to $H_2$ produced with renewable energy. The rule is given by the following equations and inequations (so that the total Hz produced is equal to the Hz consumed, the final state of charge of the storage is equal to the state of charge at the final step):

$$soc_{stor,n}^{h2,RFNBO} + soc_{stor,n}^{h2} \leq QMH2_{storage}$$

*Initial step:*

$$Soc_{stor}^{init,perc} \times QMH2_{stor} + MH2_{stor,n}^{ch} \times \frac{time,step}{60} = Soc_{stor,1} + MH2_{stor,n}^{dis} \times \frac{time,step}{60}$$

*Other step :*

$$Soc_{stor,n-1} + MH2_{stor,n}^{ch} \times \frac{time,step}{60} = Soc_{stor,n} + MH2_{stor,n}^{dis} \times \frac{time,step}{60}$$

*Initial step :*

$$Soc_{stor}^{init,perc,RFNBO} \times QMH2_{stor} + MH2_{stor,n}^{ch,RFNBO} \times \frac{time,step}{60} = Soc_{stor,1}^{RFNBO} + MH2_{stor,n}^{dis,RFNBO} \times \frac{time,step}{60}$$

*Other step:*

$$Soc_{stor,n-1}^{RFNBO} + MH2_{stor,n}^{ch,RFNBO} \times \frac{time,step}{60} = Soc_{stor,n}^{RFNBO} \times \frac{time,step}{60} + MH2_{stor,n}^{dis,RFNBO}$$

The electricity consumption for $H_2$ storage rule is in implementations the following:

$$P_{stor}^{grid,n} + P_{stor}^{ren,n} = elec_{compressor}^{cons} * (MH2_{stor,rfnbo}^{ch,n} + MH2_{stor}^{ch,n})$$

The constraints related to $H_2$ storage may further include a CAPEX and OPEX rule, the CAPEX and the OPEX including the cost of the tank and the compression, as follows:

$$capex_{h2,stor} = cost_{capex}^{h2,stor} \times QMH2_{stor} \times 10^6$$

$$opex_{h2,stor} = cost_{opex}^{h2,stor} \times QMH2_{stor} \times 10^6$$

The constraints related to $H_2$ storage may further include the total cost of the $H_2$ storage for the system, as follows:

$$cost_{h2,stor} = \frac{capex_{h2,stor}}{nb_{years}} + opex_{h2,stor}$$

The constraints include in implementations energy balance constraints as previously discussed. These constraints may be developed in an "energy_sys" file. The global equation for energy balance is the following, but is in implementations divided in 2 equations (one with renewables energy and one with the grid) to tag the hydrogen produced:

$$P_{pv} + P_{wind} + P_{grid}^{ch} = P_{grid}^{dis} + P_{ely}^{grid,n} + P_{ely}^{ren,n} + P_{Curt}^{n} + P_{water,treatment}^{n} + P_{stor}^{ren,H2} + P_{stor}^{grid,H2} + P_{aux}^{grid} + P_{aux}^{ren} + \cdots$$

The energy balance equation for renewable (green) energy is in implementations the following:

$$P_{pv}^{n} + P_{wind}^{n} + P_{bess}^{rfnbo,dis,n} = P_{grid}^{dis,n} + P_{ely}^{ren,n} + P_{Curt}^{n} + P_{stor}^{ren,H2} + P_{aux}^{ren} + P_{water,treatment}^{n} + P_{bess}^{rfnbo,ch,n}$$

The grid energy balance equation (*i.e.* balance equation for energy not considered as green) is in implementations the following:

$$P_{grid}^{ch,n} + P_{bess}^{dis,n} = P_{ely}^{grid,n} + P_{stor}^{grid,H2} + P_{aux}^{grid} + P_{water,treatment}^{grid,n} + P_{bess}^{ch}$$

The an electrolyzer stand-by-mode consumption rule is in implementations the following:

$$P_{electrolyseur}^{stop} = P_{aux}^{grid} + P_{aux}^{ren}$$

where $P_{ely}^{stop}$ refers to the consumption of the electrolyzer in stand-by mode.

The constraints include in implementations mass balance constraints as previously discussed. The green and non-green $H_2$ production distinction rule is the following:

$$Prod_{H2}^{notRFNBO}(t) = P_{ely}^{grid}(t) \times \left(1 - rate_{RFNBO}^{grid}\right) \times \eta_{electrolyseur}$$

$$Prod_{H2}^{RFNBO}(t) = \left(P_{ely}^{ren}(t) + P_{ely}^{grid}(t) \times rate_{RFNBO}^{grid}\right) \times \eta_{electrolyseur}$$

The balance rule for $H_2$ directly delivered and $H_2$ stored is the following:

$$MH2_{ely}^{RFNBO,n} = MH2_{ds}^{RFNBO,n} + MH2_{stor}^{ch,RFNBO,n}$$

$$MH2_{ely}^{n} = MH2_{ds}^{n} + MH2_{stor}^{ch,n}$$

The constraints may further include in implementations constraints related to RFNBO criteria. These include a rule for Hz revenues, which is the following:

$$revenue_{h2}^{RFNBO} = \left(\sum_{i=1}^{n}(MH2_{ely}^{ds,RFNBO} + MH2_{stor}^{dis,RFNBO}) \times price_{h2}^{RFNBO}\right) \times \frac{time_{s}tep}{60}$$

$$revenue_{h2}^{no,RFNBO} = \left(\sum_{i=1}^{n}(MH2_{ely}^{ds} + MH2_{stor}^{dis}) \times price_{h2}^{noRFNBO}\right) \times \frac{time_step}{60}$$

$$revenue_{h2} = revenue_{h2}^{RFNBO} + revenue_{h2}^{no,RFNBO}$$

The constraints may further include in implementations further rules related to H$_2$ RFNBO, which are now discussed. H$_2$ RFNBO is calculated per period (monthly or quarterly). By regulation, the H$_2$ RFNBO calculated is not equal to the real quantity produced. This rate is fictitious and is calculated from the total green energy available over this time horizon. The corresponding rule is:

$$\sum_{i=1}^{month}(P_{grid}^{dis,n}) \times \eta_{ely} \geq Prod_{H2,ely}^{sup}(month)$$

The quantity of H$_2$ RFNBO is limited by the real delivery (outlet of the system) of Hz (RFNBO and not RFNBO) over the time horizon. The corresponding rule is:

$$Prod_{H2,rfnbo}^{sup}(month) \leq \sum_{i=1}^{month}(Prod_{H2,ely}^{reel} + \delta_{H2stor})$$

The quantity of H$_2$ stored during this period is also considered. The corresponding rule is:

$$\delta_{H2stor} = \sum_{i=1}^{month}(MH2_{dis,n}^{stor} - MH2_{ch,n}^{stor})$$

The new quantity of H$_2$ RFNBO is removed from the real non RFNBO part over this period. The corresponding rule is:

$$Delivery_{H2}^{not,rfnbo}(month) = \sum_{i=1}^{month}(Delivery_{H2,ely}^{reel,notrfnbo}) - Prod_{H2,rfnbo}^{sup}(month)$$

The "new quantity" of H$_2$ RFNBO is added to the real RFNBO part over this period. The corresponding rule is:

$$Delivery_{H2}^{rfnbo}(month) = \sum_{i=1}^{month}(Delivery_{H2,ely}^{reel}) + Prod_{H2,rfnbo}^{sup}(month)$$

The revenues are calculated using the fictious delivery of H$_2$ RFNBO. The corresponding rule is:

$$revenue_{H2}(year) = \sum_{i=1}^{12} (Delivery_{H2}^{rfnbo} \times price_{H2}^{rfnbo} + Delivery_{H2}^{not,rfnbo} \times price_{H2}^{not,rfnbo})$$

The constraints each related to the Hz demand in implementations are now discussed.

The minimal hourly demand rule and the maximal hourly demand rule are in implementations the following:

$$MH2_{ely}^{ds} + MH2_{stor}^{dis} + MH2_{ely}^{ds,rfnbo} + MH2_{stor}^{dis,rfnbo} \geq hourly_{min}^{prod}$$

$$MH2_{ely}^{ds} + MH2_{stor}^{dis} + MH2_{ely}^{ds,rfnbo} + MH2_{stor}^{dis,rfnbo} \leq hourly_{max}^{prod}$$

The minimal ramp-up rule and the maximal ramp-down rule are in implementations the following:

$$Total_{MH2}^{ds,t} = MH2_{ely}^{ds,t} + MH2_{stor}^{dis,t} + MH2_{ely}^{ds,rfnbo,t} + MH2_{stor}^{dis,rfnbo,t}$$

$$Total_{MH2}^{ds,t} - Total_{MH2}^{ds,t-1} \leq max_{hourly}^{ramp}$$

$$Total_{MH2}^{ds,t} - Total_{MH2}^{ds,t-1} \geq -max_{hourly}^{ramp}$$

To simplify the equation in the documentation and the code, the variable $MH2_{supply}^{tot,n}$ is used. This variable is calculated at the time step t using the above formulae.

The minimal daily demand rule and the maximal daily demand rule are in implementations the following (for day d):

$$\sum_{j=d}^{d+24} (MH2_{ely}^{ds,j} + MH2_{stor}^{dis,j} + MH2_{ely}^{ds,rfnbo,j} + MH2_{stor}^{dis,rfnbo,j}) \geq daily_{min}^{prod}$$

$$\sum_{j=d}^{d+24} (MH2_{ely}^{ds,j} + MH2_{stor}^{dis,j} + MH2_{ely}^{ds,rfnbo,j} + MH2_{stor}^{dis,rfnbo,j}) \leq daily_{max}^{prod}$$

The annual $H_2$ demand rule is in implementations the following:

$$annual_{h2}^{demand} = \sum_{i=1}^{n} (MH2_{ely}^{ds} + MH2_{stor}^{dis} + MH2_{ely}^{ds,rfnbo} + MH2_{stor}^{dis,rfnbo}) \times \frac{time_s tep}{60}$$

The one or more fluctuation rules over the predetermined time period are in implementations implemented as follows. Due to the refinery, the number of changes at the downstream is limited "x" times ( $max_{nb}^{change,period}$ )each "y" hour ( $time_{flexibility}^{demand}$ ) The following fluctuation rule limits the number of changes using a sum of binaries which tags hours in a day when a change at the outlet flow of the system occurs:

$$
\text{If } n \text{ is not the last time step}
$$

$$
\sum_{j=n}^{n+time_{flexibility}^{demand}} bin_{demand}^{change,n} \leq max_{nb}^{change,period}
$$

$$
\text{Other step: Skip}
$$

The following fluctuation rule tags the hour when a ramp down at the outlet flow occurs.

$$
\text{If } n \text{ is not the last time step}
$$

$$
10^{10} \times bin_{demand}^{change,n} - \left(MH2_{supply}^{tot,n} - MH2_{supply}^{tot,n+1}\right) \geq 0
$$

$$
\text{Other step: Skip}
$$

The following fluctuation rule tags the hour when a ramp up at the outlet flow occurs.

$$
\text{If } n \text{ is not the last time step}
$$

$$
-10^{10} \times bin_{demand}^{change,n} - \left(MH2_{supply}^{tot,n} - MH2_{supply}^{tot,n+1}\right) \leq 0
$$

$$
\text{Other step: Skip}
$$

The constraints may in implementations also further comprise the following constraints.

The following constraint sets a minimum average rate of RFNBO to be achieved over the year. This may be used if the optimization has the objective to provide an optimal (economical) sizing that allows to produce a minimum amount of green hydrogen. The constraint is the following:

$$
\sum_{i=1}^{n} MH2_{ely}^{RFNBO} \geq RFNBO_{targeted} \times ratio_{prod}^{h2} \times \sum_{i=1}^{n} \left(P_{ely}^{ren} + P_{ely}^{grid} \times rate_{RFNBO}\right)
$$

The following constraints allows to set a minimum production of hydrogen per renewables. Green hydrogen is produced from renewable energy on site and from the grid (contribution according to the rate RFNBO).

$$\sum_{i=1}^{n} P_{ely}^{ren} \times ratio_{prod} \geq min_{prod,2}^{ren}$$

One objective may be to have a good electrolyzer's load factor. To study the influence of this operational results, the following constraint may be used (average load factor over one year):

$$\sum_{i=1}^{n} (P_{ely}^{ren} + P_{ely}^{grid}) \geq min_{ely}^{load,factor,targeted} \times QP_{ely} \times time_{horizon} \times 24$$

The optimization problem for optimizing the objective function is in implementations:

$$\begin{cases} max(\sum_{i=1}^{n}(MH2_{supply}^{tot,n} - a \times P_{grid}^{ch,n} - b \times P_{pv}^{n} - c \times P_{wind}^{n}) - d \times QP_{ely} - e \times QMH2_{stor} - f \times QE_{bat}) \\ \\ \qquad\qquad QP_{wind}, QP_{pv}, QP_{ely}, QMH2_{stor}, QE_{bat} \end{cases}$$

where the coefficients a, b, c, d, e, f may be selected by a user (for example based on carbon emissions objectives).

It is now discussed second implementations where the hybrid system is for green $H_2$ derivative production. The second implementations may be combined with the first implementations in examples where the system is to produce both green $H_2$ and green $H_2$ derivatives.

FIG. 2 shows a schematic illustration of an example of such hybrid system 20. As illustrated on FIG. 2, the technologies comprise renewable power generating units, namely a wind farm 22 and a photovoltaic plant 24. The technologies also comprise an electrolyzer 26, to which the renewable power generating units 22 and 24, and optionally ESS 28, supply power. The renewable power generating units 22 and 24, and optionally ESS 28, also supply power to an $H_2$ storage 200. The renewable power generating units 22 and 24 may also supply (sell) power to ESS 28, and a curtailment may as well be implemented, as shown on FIG. 2. As illustrated on FIG. 2, the electrolyzer produces $H_2$, the $H_2$ being obtained at least in part from the power supplied by the renewable power generating units 22 and 24, this at least a part of the produced $H_2$ being green $H_2$. At least a part of the produced $H_2$ is sent to storage 200, and the remaining part is converted, via a Haber-Bosch process, into $H_2$ derivative (the derivative illustrated on the figure is $NH_3$, but it is to be understood that any alternative or additional derivative may be contemplated). As shown on FIG. 2, the free variables include in these implementations the power production capacity of the wind farm 22 (X1 MW), the power production capacity of the photovoltaic plant 24 (X2 MW), the production capacity of the electrolyzer 26 (X3 MW), the storage capacity of the storage 200 (Y1 tons), the capacity of the battery (X4 MW), the production capacity of the Haber-Bosch process (Y2 million tons per annum ("MTPA")). As can be seen on FIG 2, the constraints may be formulated based on values of the parameters that include an efficiency of the electrolyzer, an efficiency of the sea water treatment unit, and consumption of the storage, a pressure of the $H_2$ storage, a power consumed for $H_2$ derivative synthesis, and a production ratio between the amount of derivatives produced and the amount of $H_2$ used for this production. In the hereinbelow discussion regarding the second implementations, RFNBO refers to the renewable fuels of non-biological origins and to the $H_2$ produced by only renewable energies.

The parameter involved in the second implementations are now presented in the tables below.

| Parameter | Units | Desciption |
|---|---|---|
| $QP_{wind}^{ref}$ | MW | Reference capacity for wind farm related to the production in the inputs |
| $P_{wind}^{ref,n}$ | MW | Reference production of energy at timestep n for wind farm |
| $cost_{capex}^{wind}$ | $.kW^{-1}$ | capex power for wind farm |
| $cost_{opex}^{wind}$ | $.kW^{-1}.year^{-1}$ | opex power for wind farm over one year |
| $wind_{availability}$ | [0,1] | Availability of the wind farm over the time |

*Table 16: parameters related to the wind farm*

| Parameter | Units | Desciption |
|---|---|---|
| $QP_{pv}^{ref}$ | MW | Reference capacity for pv plant related to the production in the inputs |
| $P_{wind}^{ref,n}$ | MW | Reference production of energy at timestep n for pv plant |
| $cost_{capex}^{pv}$ | $.kW^{-1}$ | capex power for pv plant |
| $cost_{opex}^{pv}$ | $.kW^{-1}.year^{-1}$ | opex power for pv plant over one year |
| $pv_{availability}$ | [0,1] | Availability of pv plant over the time |

*Table 17: parameters related to the photovoltaic plant*

| Parameter | Units | Desciption |
|---|---|---|
| $name$ | "NH3", "LH2", "e-MeOH" | Name of the energy vector produced |
| $ratio_{power,prod}^{energy,vector}$ | $kWh.kg^{-1}H_2$ | Constant efficiency |
| $ratio_{power,prod}^{NH3}$ | kWh | Energy consumed by the reactor as a function of the load factor |
| $ratio_{H2,consumed}^{energy,vector,produced}$ | $kg\ produced.kg^{-1}H_2$ | |
| $reac_{downtime}^{reac}$ | hours | Minimum shutdown time when the reactor is turned off |
| $max_{rampup}^{reac}$ | % | Maximum variation of the load factor during ramp-up |
| $max_{rampdown}^{reac}$ | % | Maximum variation of the load factor during ramp-down |
| $min_{prod}^{NH3,reac}$ | % | Minimum production flow (under this value, no production) |
| $max_{shutdown}^{reac}$ | % | Maximum number of shutdowns over a year |
| $cost_{capex}^{reac}$ | $.MTPA^{-1}$ | capex per MTPA |
| $cost_{opex}^{reac}$ | $.MTPA^{-1}.year^{-1}$ | opex per MTPA over a year |

*Table 18: parameters related to the reactor*

| Parameters | Units | Description |
|---|---|---|
| $variation_{ely}^{max}$ | $\%.h^{-1}$ | maximum variation of electrolyzer load factor between 2 timesteps |
| $load_{ely}^{max}$ | % of $QMH2$ | Minimum Power |
| $load_{ely}^{min}$ | % of $QMH2$ | Maximum Power |
| $nom_{efficiency}$ | MW/ton H2 | Electric consumption of the electrolyzer to produce 1 kg of $H_2$ |
| $ratio_{prod}$ | ton H2/MW | ratio of conversion from Power to $H_2$ ($1/nom_{efficiency}$) |
| $ratio_{power}^{wtu}$ | ton H2/MW | ratio of the electrical consumption of water treatment per H2 produced |
| $P_{ely}^{standby}$ | MW | consumption of energy when the electrolyzer is turned off (standby) |
| $cost_{capex}^{ely}$ | $.kW^{-1}$ | capex power for electrolysis system |
| $cost_{opex}^{ely}$ | $.kW^{-1}.year^{-1}$ | opex power for electrolyser over one year |

*Table 19: parameters related to the electrolyzer*

| Parameters | Units | Description |
|---|---|---|
| $MH2_{storage}^{max,ch}$ | $tons/time_{step}^{-1}$ | Constraint on the maximum flow of charge |
| $MH2_{storage}^{max,dis}$ | $tons/time_{step}^{-1}$ | Constraint on the maximum flow of discharge |
| $elec_{compressor}^{cons}$ | $MW/tonH2$ | Consumption of the electrolyzer for the storage |
| $h2_{stor}^{soc,max}$ | % | Maximum quantity of h2 that can be stored in the h2 storage |
| $h2_{stor}^{soc,min}$ | % | Mimimum quantity of h2 in the storage |
| $cost_{capex}^{h2storage}$ | $M\$.tons^{-1}$ | capex per tons for hydrogen storage |
| $cost_{opex}^{h2storage}$ | $M\$.tons^{-1}.year^{-1}$ | opex per tons for hydrogen storage over one year |

*Table 20: parameters related to H₂ storage*

| Parameters | Units | Description |
|---|---|---|
| $p_{grid}^{max,ch}$ | MW | Maximum Power which can be provided by the grid (per hour) |
| $p_{grid}^{max,dis}$ | MW | Maximum Power which can be discharged to the grid (per hour) |
| $P_{water,treatment,grid}^{n}$ | MW | Power provided by the renewables for the water treatment |
| $price^{grid,n}$ | \$/MWh | Price of energy on the grid (timeseries) |
| $annual_{max,import}^{grid}$ | MWh/year | Maximum quantity of energy which can be imported (charged) |
| $price^{grid}$ | \$/MWh | Price of energy for sale on the grid |
| $P_{stor}^{h2,grid}$ | MW | power consumed by storage from the grid |
| $bin_{grid}^{n}$ | Binary | Binary whose value is 1 when the grid is providing energy |
| $cost_{grid}$ | \$/MWh | Difference between energy purchases and sales on the network (opex) |

*Table 21: parameters related to the grid*

| Variables | Units | Description |
|---|---|---|
| $p_{pgu}^{max}$ | MW | Maximum power of the PGU |
| $efficiency_{HHV}$ | [0;1] | Efficiency of the PGU considering the HHV of H2 |
| $HHV_{h2}$ | kWh/kg H2 | Higher Heating Value of Hydrogen |

*Table 22: parameters related to the PGU*

| Parameters | Units | Description |
|---|---|---|
| $rt_{efficiency}$ | % | round trip efficiency |
| $\eta_{eff,dis,Bess}$ | % | $\frac{1}{\sqrt{rt_{efficiency}}}$ |
| $\eta_{eff,ch,Bess}$ | % | $\sqrt{rt_{efficiency}}$ |
| $soc_{bess}^{max}$ | $\%.h^{-1}$ | maximum energy that can be stored |
| $soc_{bess}^{min}$ | $\%.h^{-1}$ | minimum soc of the battery |
| $init_{bess}^{soc}$ | % | state of charge of the battery at the initial step |
| $p_{bess}^{max,charge}$ | % | maximum flow of energy charged in the battery during 1h |
| $p_{bess}^{max,discharge}$ | % | maximum flow of energy discharged during 1h |
| $cost_{capex}^{bess}$ | $\$.kW^{-1}$ | capex power for the battery |
| $cost_{opex}^{bess}$ | $\$.kW^{-1}.year^{-1}$ | opex power for the battery over one year |

*Table 23: parameters related to the battery*

| Parameters | Units | Description |
|---|---|---|
| $n_{project}$ | years | lifetime of the project |
| $time_{step}$ | min | time steps |
| $time_{horizon}$ | days | period of the simulation |
| $annual_{demand}$ | tons/year | Annual demand of energy vector |

*Table 24: other parameters*

| Parameters | Units | Description |
|---|---|---|
| $price_{energy, vector}$ | \$/tons | hypothetical resale price |
| $penalization_{curtailment}$ | \$/MWh | hypothetical price to penalize the curtailment (default value is 0) |

*Table 25: economic parameters*

The variables involved in the second implementations are listed in the following tables. It is to be understood that the free variables of the optimization may be selected (*e.g.* by a user) within these below variables, and that therefore some of the below variables may not be selected as free variables, *e.g.* may be fixed or may not be present at all (for example if the corresponding technology is not present).

| Variables | Units | Description |
|---|---|---|
| $P_{wind}^n$ | $MW$ | Power of Wind farm at timestep n |
| $capex_{wind}$ | \$ | Global capex related to the wind farm |
| $opex_{wind}$ | \$ | Global opex related to the wind farm |

*Table 26: variables related to the wind farm*

| Variables | Units | Description |
|---|---|---|
| $P_{pv}^n$ | $MW$ | Power of pv plant at timestep n |
| $capex_{pv}$ | \$ | Global capex related to the PV plant |
| $opex_{pv}$ | \$ | Global opex related to the PV plant |

*Table 27: variables related to the photovoltaic plant*

| Variables | Units | Description |
|---|---|---|
| $QP_{ely}$ | MW | Nominal power of the electrolyzer |
| $P_{water,treatment}^n$ | MW | Power provided by the renewables for the water treatment |
| $P_{ely}^{ren,n}$ | MW | Power delivered by the renewables to the electrolyzer (not standby mode) |
| $P_{stop,ely}^{ren,n}$ | MW | Power delivered by the renewables to the electrolyzer (standby mode) |
| $bin_{ely}^n$ | Binary | Binary whose value is 1 when the electrolyser is not in standby mode |
| $MH2_{ely}$ | t $H_2.h^{-1}$ | hydrogen produced by ely per hour |
| $MH2_{ely}^{reac}$ | t $H_2.h^{-1}$ | hydrogen directly provided by ely to the reactor per hour |
| $capex_{ely}$ | \$ | Global capex related to the electrolysis system |
| $opex_{ely}$ | \$ | Global opex related to the electrolysis system |

*Table 28: variables related to the electrolyzer*

| Variables | Units | Description |
|---|---|---|
| $QMH2_{stor}$ | ton $h_2$ | Capacity of the hydrogen storage |
| $soc^n_{h2}$ | ton | Soc h2 storage |
| $MH2^{ch}_{stor}$ | ton.$h^{-1}$ | Flow of hydrogen from ely to storage |
| $MH2^{dis,reac}_{stor}$ | ton.$h^{-1}$ | Flow of hydrogen from storage to the reactor |
| $P^{h2,ren}_{stor}$ | MW | power consumed by storage from renewables |
| $bin^{pos}_{h2,stor}$ | Binary | 1 is when hydrogen is charged in the storage and 0 for discharged |
| $capex_{h2,stor}$ | \$ | Global capex related to hydrogen storage |
| $opex_{h2,stor}$ | \$ | Global opex related to hydrogen storage |

*Table 29: variables related to the H2 storage*

| Variables | Units | Description |
|---|---|---|
| $P^{ch,n}_{grid}$ | MW | Power which is provided by the grid (per hour) |
| $P^{ch,n}_{grid}$ | MW | Power which is discharged to the grid (per hour) |
| $P^n_{water,treatment,grid}$ | MW | Power provided by the renewables for the water treatment |
| $P^{grid,n}_{ely}$ | MW | Power delivered by the grid to the electrolyzer (not standby mode) |
| $P^{grid,n}_{stop,ely}$ | MW | Power delivered by the grid to the electrolyzer (standby mode) |
| $P^{grid,n}_{reac}$ | MW | Power delivered by the grid to the reactor |
| $P^{h2,grid}_{stor}$ | MW | power consumed by storage from the grid |
| $bin^n_{grid}$ | Binary | Binary whose value is 1 when the grid is providing energy |
| $cost_{grid}$ | \$/MWh | Difference between energy purchases and sales on the network (opex) |

*Table 30: variables related to the grid*

| Variables | Units | Description |
|---|---|---|
| $P^n_{pgu}$ | MW | Power provided by the PGU to the reactor |
| $MH2^{dis,pgu}_{stor}$ | ton.$h^{-1}$ | Flow of hydrogen from storage to the PGU |
| $bin^n_{pgu}$ | Binary | Binary whose value is 1 when the pgu is providing energy |

*Table 31: variables related to the PGU*

| Variables | Units | Description |
|---|---|---|
| $QE_{bess}$ | MWh | Capacity of battery |
| $soc^n_{bess}$ | MWh | Soc battery storage |
| $P^{ch,n}_{bess}$ | MW | Power charged in the battery |
| $P^{dis,n}_{bess}$ | MW | Power discharged in the battery |
| $bin^{pos}_{bess}$ | Binary | 1 is when the battery is charged and 0 for discharged |
| $capex_{bess}$ | \$ | Global capex related to the battery |
| $opex_{bess}$ | \$ | Global opex related to the battery |

*Table 32: variables related to the battery*

| Variables | Units | Description |
|---|---|---|
| $P_{reac}$ | MW | power consumption of the reactor by renewables |
| $MH2^n_{reac}$ | $ton.h^{-1}$ | Flow of hydrogen which comes to the reactor (from ely and h2 storage) |
| $M^n_{reac}$ | $ton.h^{-1}$ | Flow of production |
| $QM_{reac}$ | MTPA | size of the reactor |
| $bin^M_{reac}$ | Binary | 1 is when the reactor is on |
| $bin^N_{reac,start}$ | Binary | 1 means that the reactor is turned on at this time step |
| $bin^N_{reac,shut}$ | Binary | 1 means that the reactor is turned off at this time step |
| $capex_{reac}$ | $ | Global capex related to the production |
| $opex_{reac}$ | $ | Global opex related to the production |

*Table 33: variables related to the reactor*

| Variables | Units | Description |
|---|---|---|
| $P_{curt}$ | MW | Power curtailed (no consummed and don't consider losses for battery, H2 storage,...) |

*Table 34: other variables*

| Variables | Units | Description |
|---|---|---|
| $revenue_{NH3}$ | $ | Total revenue from the sale of NH3 |
| $total_{capex}$ | $ | Sum of all the capex of the system |
| $total_{opex}$ | $ | Sum of all the opex of the system |

*Table 35: economic variables*

The constraints of the second implementations are now presented. As for the first implementations, if one technology is not used in or not part of the hybrid system (*e.g.* not selected by the user), the constraints corresponding to these technology are not used in the optimization, except for the constraints related to the electrolyzer, which are mandatorily present. The constraints related to a $H_2$ derivative demand over a predetermined time period are identical to those related to a $H_2$ demand discussed in the first implementations, except that $H_2$ derivative(s) is/are demanded instead of $H_2$.

The wind farm production rule is in implementations the following:

$$P^n_{wind} = P^{ref,n}_{wind} * wind_{availability} \times \frac{QP_{wind}}{QP^{ref}_{wind}}$$

The constraints related to the wind farm may further include a cost of the wind farm. The wind cost considers the CAPEX and OPEX per year using a parameter proportional to the installed capacity. The constraints is the following:

$$Capex_{wind} = QP_{wind} \times cost^{wind}_{capex} \times 10^3$$

$$Opex_{wind} = QP_{wind} \times cost^{wind}_{Opex} \times 10^3$$

The photovoltaic plant production rule is in implementations the following (the production being calculated by interpolating a reference profile):

$$P_{pv}^n = P_{pv}^{ref,n} * pv_{availability} \times \frac{QP_{pv}}{QP_{pv}^{ref}}$$

The constraints related to the wind farm may further include a cost of the PV plant. The PV cost considers the CAPEX and OPEX per year using a parameter proportional to the installed capacity. The constraints is the following:

$$Capex_{pv} = QP_{pv} \times cost_{capex}^{pv} \times 10^3$$

$$Opex_{pv} = QP_{pv} \times cost_{Opex}^{pv} \times 10^3$$

The PGU power production rule is the following (PGU using hydrogen form storage to produce electricity):

$$P_{pgu}^n = MH2_{stor}^{dis,pgu,n} \times HHV_{h2} \times pgu_{eff}$$

The PGU activation rule is the following (Power of renewables lower to the size of the PGU: the PGU is activated only when the renewables energy available is lower than the power of the PGU, for example sized according to the turndown of the process):

$$P_{pgu}^n \leq p_{PGU}^{max} \times (1 - bin_{PGU}^n) \times 10^9 - (P_{wind}^n + P_{pv}^n - p_{PGU}^{max})$$

The hourly grid energy purchase and injection rule is the following (it is not possible to buy energy from the grid and cell energy to the grid at the same time step):

$$P_{grid}^{dis,n} = P_{grid}^{dis,max} \times bin_{grid,ch}$$

$$P_{grid}^{ch,n} = P_{grid}^{ch,max} \times (1 - bin_{grid,ch})$$

The constraints related to the grid comprise in implementations the following grid cost rule (if the $grid_{sale,price}$ is not set to 0):

$$cost_{grid} = P_{grid}^{ch,n} \times grid_{purchase,price}^n - grid_{sale,price} \times P_{grid}^{dis,n}$$

as well as the following grid cost rule (if the $grid_{sale,price}$ is not set to 0, meaning that the price of the electricity sold is the same as the buying cost at time step n):

$$cost_{grid} = P_{grid}^{ch,n} \times grid_{purchase,price}^n - grid_{purchase,price}^n \times P_{grid}^{dis,n}$$

The power variation rule of the electrolyzer is the following:

$$\left| P_{ely}^{ren,t} - P_{ely}^{ren,t-1} \right| \leq variation_{ely}^{max}$$

The capacity rule of the electrolyzer is the following (the electrolyzer unit is operating between a minimum and maximum load):

$$load_{ely}^{min} . QP_{ely} - 10^{12} \times (1 - bin_{ely}^{n}) \leq P_{ely}^{ren,n} + P_{ely}^{grid,n} \leq QP_{ely} . load_{ely}^{max}$$

The water treatment consumption rule is the following (The electrolyzer is consuming water with high purity to produce $H_2$. This water may be treated before used in the same or different site.):

$$P_{water,treatment}^{grid}(t) + P_{water,treatment}^{ren}(t) = Prod_{H2}(t) \times ratio_{power}^{wtu}$$

The water treatment rule may also be part of the constraints in the first implementations previously discussed.
The electrolyzer stand-by-mode consumption rule is the following (When the electrolyzer is not operating and at a load lower than the $load_{ely}^{min}$, the electrolyzer is turned off. Nevertheless, the unit is still consuming energy to keep the stacks hot and enable a quick warm start.):

$$MH2_{ely}^{n} \leq 10^{12} \times bin_{ely}^{n}$$

$$P_{stop,ely}^{ren,n} + P_{stop,ely}^{grid,n} = (1 - bin_{ely}^{n}) \times p_{ely}^{standby}$$

The constraints may further include a cost of the electrolyzer. The electrolyzer cost considers the CAPEX and OPEX per year using a parameter proportional to the installed capacity. The corresponding rule is the following:

$$Capex_{ely} = QP_{ely} \times cost_{capex}^{ely} \times 10^{3}$$

$$Opex_{ely} = QP_{ely} \times cost_{Opex}^{ely} \times 10^{3}$$

The charge time rule for a battery of the system is the following (The battery cannot be charged or discharged during the same time step.):

$$P_{bess}^{dis} \leq 10^{6} \times (1 - bin_{bess}^{activated,pos})$$

$$P_{bess}^{dis} \times \frac{time_{step}}{60} \leq C_{rate} \times QE_{bess}$$

The state-of-charge rule of the battery is the following.

$$Soc_{bess,t-1} + P_{bess}^{ch} \times \eta_{eff,ch,Bess} \times \frac{time_{step}}{60} = Soc_{bess,t} + P_{bess}^{dis} \times \frac{time_{step}}{60} \times \eta_{eff,dis,bess}$$

The battery state of charge is an energy balance between the energy charged, discharged and the previous state of charge. The charging and discharging flows are considering an efficiency which is a root square of the round trip efficiency.
The state-of-charge end rule of the battery is the following:

$$Soc_{bess,t=1} = Soc_{bess,t=end}$$

The state of charge at the end of the year is equal to the state of charge at the first time step. This enables to "pay-back" the energy used from the battery. It means that the energy consumed by the system is really produced by the system.
The capacity rule of the battery is the following (In the battery, only a percentage of the capacity is usable. This usable part is defined with the $soc_{min}$ and $soc_{min}$:

$$Soc_{bess,t} \leq QE_{bess} \times soc_{max}$$

$$Soc_{bess,t} \geq QE_{bess} \times soc_{min}$$

The constraints related to the battery may further include a battery cost. The battery cost considers the CAPEX and OPEX per year using a parameter proportional to the installed capacity, as follows:

$$Capex_{bess} = QP_{bess} \times cost_{capex}^{bess} \times 10^3$$

$$Opex_{bess} = QP_{bess} \times cost_{Opex}^{bess} \times 10^3$$

The Hz storage maximal charge and discharge rule is in implementations the following (flows-constraints on $MH2_{stor}^{ch}$ and $MH2_{stor}^{dis}$:

$$MH2_{stor,t}^{ch} \leq 10^4 \times bin_{ch}^{pos}$$

$$MH2_{stor,t}^{dis} \leq 10^4 \times (1 - bin_{ch}^{pos})$$

This tule enables to not charge and discharge the storage during the same time step. The flow of charge and discharge can be limited to a maximum value (tons/hours) by adding the following to the rule

$$MH2_{stor,t}^{ch} \leq qH2_{ch}^{max}$$

$$MH2_{stor,t}^{dis} \le qH2_{dis}^{max}$$

The $H_2$ state-of-charge rule is in implementations defined by the following equations and inequations:

$$soc_{stor,n}^{h2} \le QMH2_{storage}$$

$$Soc_{stor,n-1} + MH2_{stor,n}^{ch} \times \frac{time_{step}}{60} = Soc_{stor,n} + (MH2_{stor,n}^{dis,reac}) \times \frac{time_{step}}{60}$$

(The $H_2$ storage state of charge is a balance between charge, discharge and previous state of charge. No efficiencies or losses are considered.)

$$Soc_{h2,t} \le QMH2_{stor} * h2_{stor}^{soc,max}$$

$$Soc_{h2,t} \ge QMH2_{stor} * h2_{stor}^{soc,min}$$

(In the $H_2$ storage, only a percentage of the capacity is "usable". This "usable" part is defined with the $soc_{min}$ and $soc_{max}$: The constraints related to Hz storage further include in implementations a state of charge end rule (The state of charge at the end of the year is equal to the state of charge at the first time step), which is the following:

$$Soc_{h2,t=1} = Soc_{h2,t=end}$$

The electricity consumption for $H_2$ storage rule is in implementations the following (The electrical consumption of the storage depends on the flow at the inlet of the compressor.):

$$P_{stor}^{h2,ren} + P_{stor}^{h2,grid} = elec_{compressor}^{cons} \times MH2_{stor}^{ch}$$

The constraints related to Hz storage further include in implementations a cost of $H_2$ storage rule, which considers the CAPEX and OPEX per year using a parameter proportional to the installed capacity, as follows:

$$Capex_{h2,stor} = QMH2_{stor} \times cost_{capex}^{h2storage} \times 10^6$$

$$Opex_{h2,stor} = QMH2_{stor} \times cost_{opex}^{h2storage} \times 10^6$$

The $H_2$ derivative production rule is in implementations the following (A constant ratio of conversion between $H_2$ derivative and $H_2$ is used to calculate the amount of $H_2$ derivative produced.):

$$M_{reac}^{n} = MH2_{reac}^{n} \times ratio_{H2,consumed}^{energy,vector,produced}$$

The power consumption rule for $H_2$ derivative production is in implementations defined as follows. If no efficiency curve is provided, a constant efficiency proportional to the $H_2$ consumption is used by default. The power consumption is deduced from this constant coefficient and the $H_2$ consumption. For e-MeOH, $NH_3$ and LHz, the corresponding rule is as follows

$$(P_{reac}^n + P_{pgu}^n + P_{reac}^{grid,n}) \times \frac{60}{time_{step}} = MH2_{reac}^n \times reac_{ratio}^{power,prod} \times \frac{60}{time_{step}}$$

For $NH_3$, an efficiency curve can be used if the size of the plant is fixed and a multiple of 0.8 MTPA (KBR curve). The functions below are activated by setting the input parameter *"efficiency_{curve}"* with the value "KBR":

$$LF_{reac}^n = 100 \times (\frac{M_{reac}^{outlet,n}}{QM_{reac} \times 10^6}) \times time_{horizon} \times 24$$

$$reac_{ratio}^{power,prod,n} = (0.1987 \times LF_{reac}^n + 39.955 \times bin_{reac}^n) * \frac{Qtrain_{reac}}{0.8}$$

$$(P_{reac}^n + P_{pgu}^n + P_{reac}^{grid,n}) \times \frac{60}{time_{step}} = reac_{ratio}^{power,prod,n} \times nb_{trains}$$

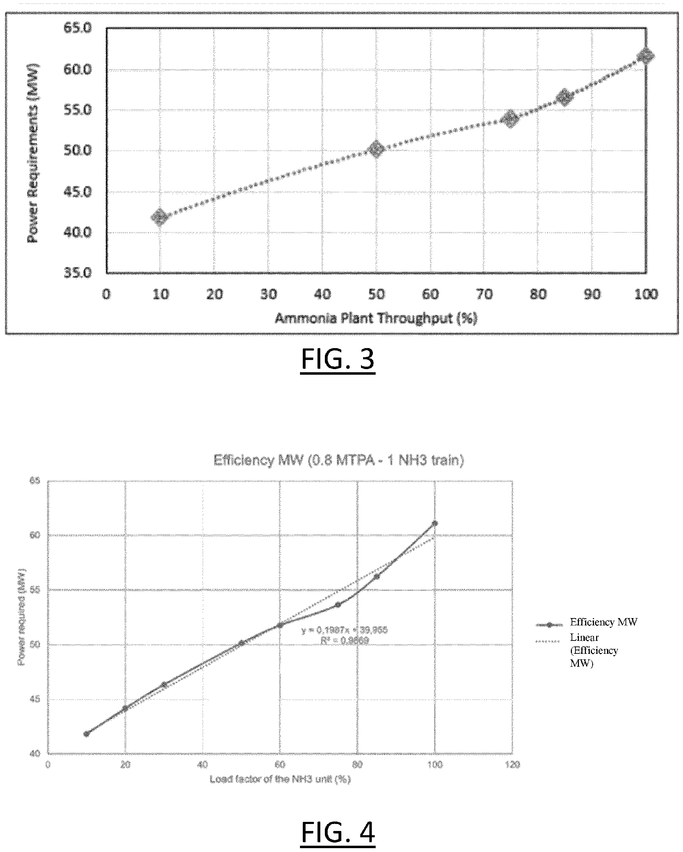

FIG. 3 shows an example of a curve of the power required (in MW) as a function of the throughput in Ammonia (in percentage). FIG. 4 shows an example of the efficiency curve for the production of Ammonia, representing the power required for production (in MW) as a function of the load factor of the $NH_3$ unit (in percentage). The efficiency curve is represented on FIG. 4 ("Efficiency MW" caption), as well as its linearization (dotted curve, "linear (Efficiency MW)" caption).

The reactor capacity rule is in implementations the following:

$$M_{reac}^n \times 8760 \times 60 \leq QM_{reac} \times time_{step}$$

$$QM_{reac} = nb_{trains} \times Qtrain_{reac}$$

The reactor capacity is defined in MTPA (millions metric tons per year). This value is calculated as the maximum flow of $H_2$ (tons/h) times 8760.

The constraints related to the reactor may further include in implementations an energy vector cost for the reactor. The reactor cost considers the CAPEX and OPEX per year using a parameter proportional to the installed capacity (MTPA), as follows:

$$Capex_{reac} = QM_{reac} \times cost_{capex}^{reac}$$

$$Opex_{reac} = QM_{reac} \times cost_{opex}^{reac}$$

The one or more reactor operation rules consists in implementations in the following several operation rules.

The first operation rule is the following:

$$reac^{downtime} \times (1 - bin_{reac}^{shut,n}) - \sum_{i=n}^{n+min(n+reac^{downtime},n_{time-step})} bin_{reac}^{n} \leq bin_{reac} \times 10^6$$

This constraint is related to process limitations(warm start). If the reactor stops it will takes at least $reac_{downtime}$ hours to restart.

The second operation rule is the following:

$$M_{reac,n} \leq bin_{n,reac} \times 10^6$$

This constraint is used to define 0 production when the reactor is under the turndown value.

The third operation rule is the following:

$$M_{reac,n} \times 8760 \times 60 \geq QM_{reac} \times time_{step} \times reac^{min,prod} - 10^{12} \times (1 - bin_{reac})$$

This constraint frames the production of the reactor at a production higher than the turndown. The second part of the inequality is used to bypass this constraint when the reactor is turned off.

The fourth operation rule is the following:

*Initial step :*
$$bin_{reac}^{start,n} = bin_{reac}^{n}$$

*Other step :*
$$bin_{reac}^{n-1} + bin_{reac}^{n} \leq bin_{reac}^{start,n}$$

Binaries(start/shutdown/reac) are used to determine if the reactor is operating or not, is starting in the specific time step or shutdown. This binaries enables then to add specifics constraints on the operation like limiting the number of stops allowed of the process, limit the availability of the system.

The fifth operation rule is the following:

*If n is not 1 & n-1 in $time_{steps}$*
$$bin_{reac}^{start,n} - bin_{reac}^{shut,n} \geq bin_{reac}^{n} - bin_{reac}^{n-1}$$

*Other step : Skip*

This constraint and the next one are used to tag a change in the status of the reactor. If the status of the reactor is not the as the previous time step, then the reactor has been stopped or started.

The sixth operation rule is the following:

$$bin_{reac}^{start,n} + bin_{reac}^{shut,n} \geq 1$$

This constraint is similar to the previous one and may not be used.

The seventh operation rule is the following:

$$\sum_{i=1}^{n} bin_{reac}^{shut,i} \leq max_{shutdown}^{reac}$$

This constraint is linked to process limitations to allow a certain number of stops per year.

The eighth operation rule is the following (The operation of the reactor is limited for ramp-up proportionally to the installed capacity.):

$$If\ n\ is\ different\ from\ 1$$
$$M_{reac}^{n} - M_{reac}^{n-1} \leq QM_{reac} \times reac, max_{rampup}$$
$$Other\ step : Skip$$

The ninth operation rule is the following (The operation of the reactor is limited for ramp-down proportionally to the installed capacity.):

$$If\ n\ is\ different\ from\ 1$$
$$M_{reac}^{n} - M_{reac}^{n-1} \geq QM_{reac} \times reac, max_{rampdown} - 10^{12} \times (1 - bin_{reac}^{n})$$
$$Other\ step : Skip$$

The tenth operation rule is the following (The annual demand represents the target of global production of $H_2$ derivatives that has to be reached each year.):

$$annual_{demand} \times 60 = \sum_{i=1}^{n} (M_{reac}^{n}) \times time_{step}$$

The eleventh operation rule is the following (Depending on the hypothesis used, an average load factor can be set as a target to find an optimal solution which satisfy business criteria.):

$$QM_{reac} \times 10^{6} \times reac^{avg,load,factor} \times 60 = \sum_{i=1}^{n} (M_{reac}^{n}) \times time_{step}$$

The energy balance constraints in the second implementations are now discussed. These constraints may be developed in a file "energy_sys". A distinction is made in the power balance between renewables and grid energy.

The energy balance equation for renewable energy is in implementations the following:

$$P_{wind}^n + P_{pv}^n + P_{bess}^{dis,n} = P_{ely}^{ren,n} + P_{ely}^{stop,n} + P_{water,treatment}^n + P_{grid}^{dis,n} + P_{reac}^n + P_{bess}^{ch,n} + P_{curt}^n + P_{stor,h2}^n$$

By default, if the prefix "ren" is not specified in the name of a variable, this power comes from renewables (as $P_{reac}^n$ ). The curtailment is only calculated with energy coming from renewables.

The grid energy balance equation is in implementations the following:

$$P_{grid}^{ch,n} = P_{ely}^{grid,n} + P_{ely}^{grid,stop,n} + P_{water,treatment}^{grid,n} + P_{reac}^{grid,n} + P_{stor,h2}^{grid,n}$$

By default, the grid is used to provide electricity for the all system.

The mass balance constraints in the second implementations are now discussed. These constraints may be developed in a file "mass_sys".

The H$_2$ production rule is in implementations the following:

$$MH2_{ely}^n = (P_{ely}^{ren,n} + P_{ely}^{grid,n}) \times ratio_{MW}^{H2}$$

The a water treatment rule is in implementations the following:

$$P_{water,treatment}^n + P_{water,treatment}^{grid,n} = MH2_{ely}^n \times ratio_{power}^{wtu}$$

Each time a quantity of H$_2$ is produced, a quantity of water has been treated. Depending on the area where this water is treated, the consumption for water treatment can be included in the efficiency of the electrolyzer unit or not.

The balance rule for H$_2$ directly consumed by conversion reactor and H$_2$ stored is in implementations the following (At the outlet of the electrolyzer, the Hydrogen can be directly consumed by the process or stored.):

$$MH2_{ely}^n = MH2_{reac}^{ely} + MH2_{stor}^{ch,n}$$

with (Consequently, at the inlet of the reactor, Hz can be provided by the storage or directly by the electrolyzer.)

$$MH2_{reac}^n = MH2_{reac}^{ely} + MH2_{stor}^{dis,reac,n}$$

The constraints may further include in implementations the following costs rules. Considering all the CAPEX and OPEX of the technologies calculated before, the total CAPEX and total OPEX of the system is calculated with the following rules:

$$total_{capex} = capex_{wind} + capex_{ely} + capex_{bess} + capex_{h2,stor} + capex_{reac}$$

$$total_{opex} = opex_{wind} + opex_{ely} + opex_{bess} + opex_{h2,stor} + cost_{grid} + opex_{reac}$$

The optimization problem to optimize the objective function is in implementations:

$$\begin{cases} max(\sum_{i=1}^{n}(M_{reac}^{n} - a \times P_{grid}^{ch,n} - b \times P_{pv}^{n} - c \times P_{wind}^{n}) - d \times QP_{ely} - e \times QMH2_{stor} - f \times QE_{bat} - g \times QM_{reac}) \\ \\ QP_{wind}, QP_{pv}, QP_{ely}, QMH2_{stor}, QM_{reac}, QE_{bat} \end{cases}$$

where the coefficients a, b, c, d, e, f may be selected by a user (for example based on carbon emissions objectives).

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 5 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for optimizing a hybrid system for green $H_2$ and/or $H_2$ derivative production and/or conversion, the method comprising:

   - providing:

○ constraints, the constraints including:

■ one or more constraints each related to a $H_2$ and/or $H_2$ derivative demand over a predetermined time period; and/or
■ one or more constraints related to technologies of the hybrid system that are involved in the green $H_2$ and/or $H_2$ derivative production and/or conversion; and

○ an objective function that quantifies a rate of the green $H_2$ and/or $H_2$ derivative production and/or conversion by only renewable technologies of the hybrid system;

- optimizing the objective function based on the constraints, the optimization having free variables, the free variables including a green $H_2$ and/or $H_2$ derivative production capacity of an electrolyzer of the hybrid system, a renewable power production capacity of the hybrid system, and operational variables for mass and power exchanges between the technologies of the hybrid system, the optimization using a MILP optimization method that is based on a linear formulation of the constraints.

**2.** The method of claim 1, wherein the free variables further include variables that represent a BESS and/or $H_2$ storage capacity, and/or variables that represent a capacity of a conversion system for production of $H_2$ derivatives.

**3.** The method of claim 1 or 2, wherein the constraints include non-linear constraints, and the method further comprises, before the optimization:

- linearizing the non-linear constraints.

**4.** The method of claim 1, 2, or 3, wherein the one or more constraints each related to a $H_2$ and/or $H_2$ derivative demand over a predetermined time period include one or more of:

- an hourly $H_2$ and/or $H_2$ derivative demand rule;
- a daily $H_2$ and/or $H_2$ derivative demand rule; and/or
- an annual $H_2$ and/or $H_2$ derivative demand rule.

**5.** The method of claim 4, wherein:

- the hourly $H_2$ and/or $H_2$ derivative demand rule includes:

○ a minimal hourly demand rule and/or a maximal hourly demand rule; and/or
○ a minimal ramp-up rule and/or a maximal ramp-down rule; and/or

- the daily $H_2$ and/or $H_2$ derivative demand rule includes a minimal daily demand rule and/or a maximal daily demand rule.

**6.** The method of claim 4 or 5, wherein the one or more constraints each related to a $H_2$ and/or $H_2$ derivative demand over a predetermined time period further include one or more fluctuation rules over the predetermined time period.

**7.** The method of any one of claims 1 to 6, wherein the one or more constraints related to technologies of the hybrid system that are involved in the green $H_2$ and/or $H_2$ derivative production and/or conversion include one or more of:

- a photovoltaic plant production rule;
- a wind farm production rule;
- one or more constraints related to an electrolyzer of the system, including a power consummation rule during production and/or conversion when the electrolyzer is turned off, a power variation rule of the electrolyzer, a water treatment consumption rule, and/or a capacity rule of the electrolyzer;
- a charge time rule for a battery of the system, a state-of-charge rule of the battery, a state-of-charge end rule of the battery, and/or a capacity rule of the battery;
- an hourly grid energy purchase and/or injection rule and/or an annual maximal grid energy purchase rule; and/or
- a Hz storage maximal charge and discharge rule, a Hz state-of-charge rule, and/or an electricity consumption for $H_2$ storage rule.

8. The method of claim 7, wherein the green $H_2$ and/or $H_2$ derivative production and/or conversion consists in at least $H_2$ derivative production, and wherein the one or more constraints related to technologies of the hybrid system further include:

   - a PGU power production rule and/or a PGU activation rule.

9. The method of any one of claims 1 to 8, wherein the green $H_2$ and/or $H_2$ derivative production and/or conversion consists at least in $H_2$ derivative production, and the constraints include one or more of:

   - a $H_2$ derivative production rule;
   - a power consumption rule for $H_2$ derivative production;
   - a reactor capacity rule; and/or
   - one or more reactor operation rules.

10. The method of any one of claims 1 to 9, wherein the constraints include energy balance constraints and/or mass balance constraints.

11. The method of claim 10, wherein the green $H_2$ and/or $H_2$ derivative production and/or conversion consists in at least green $H_2$ production, and wherein:

    - the energy balance constraints include:

      o an energy balance equation for renewable energy;
      o a grid energy balance equation;
      o a battery state of charge equation; and
      o an electrolyzer stand-by-mode consumption rule; and/or

    - the mass balance constraints include:

      o a green and non-green $H_2$ production distinction rule;
      o a balance rule for Hz storage; and
      ○ a balance rule for $H_2$ directly delivered and $H_2$ stored.

12. The method of claim 10, wherein the green $H_2$ and/or $H_2$ derivative production and/or conversion consists in at least $H_2$ derivative production, and wherein:

    - the energy balance constraints include:

      ○ an energy balance equation for renewable energy;
      ○ a battery state of charge equation; and
      ○ a grid energy balance equation; and/or

    - the mass balance constraints include:

      ○ a $H_2$ production rule;
      ○ a water treatment rule;
      ○ a balance rule for Hz storage;
      ○ a balance rule for $H_2$ derivative production; and
      ○ a balance rule for $H_2$ directly consumed by conversion reactor and $H_2$ stored.

13. A computer program comprising instructions which, when the program is executed on a computer system, cause the computer system to perform the method according to any one of claims 1 to 12.

14. A computer-readable data storage medium having recorded thereon the computer program of claim 13.

15. A computer system comprising a processor coupled to a memory, the memory having recorded thereon the computer program of claim 13.

FIG. 1

FIG. 2

FIG. 3

FIG. 4

FIG. 5

Europäisches Patentamt

European Patent Office

Office européen des brevets

# EUROPEAN SEARCH REPORT

**Application Number**

EP 23 30 5114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 085 860 B (UNIV HENAN SCIENCE & TECH) 17 May 2022 (2022-05-17) | 1-6,8-15 | INV. G06Q10/04 |
| Y | * the whole document * | 7 | |
| Y | CN 110 110 897 A (UNIV NORTH CHINA ELECTRIC POWER) 9 August 2019 (2019-08-09) * the whole document * | 7 | |

**TECHNICAL FIELDS SEARCHED (IPC)**

G06Q

The present search report has been drawn up for all claims

| Place of search | Date of completion of the search | Examiner |
|---|---|---|
| Munich | 21 June 2023 | Viets, Ana |

EPO FORM 1503 03.82 (P04C01)

## ANNEX TO THE EUROPEAN SEARCH REPORT
## ON EUROPEAN PATENT APPLICATION NO.

EP 23 30 5114

This annex lists the patent family members relating to the patent documents cited in  the above-mentioned European search report.
The members are as contained in the European Patent Office EDP file on
The European Patent Office is in no way liable for these particulars which are merely given for the purpose of information.

21-06-2023

| Patent document cited in search report | | Publication date | Patent family member(s) | Publication date |
|---|---|---|---|---|
| CN 113085860 | B | 17-05-2022 | NONE | |
| CN 110110897 | A | 09-08-2019 | NONE | |

For more details about this annex : see Official Journal of the European Patent Office, No. 12/82

EPO FORM P0459